(19) **Europäisches Patentamt / European Patent Office / Office européen des brevets**

(11) **EP 4 664 819 B1**

(12) **FASCICULE DE BREVET EUROPEEN**

(45) Date de publication et mention
de la délivrance du brevet:
**13.05.2026 Bulletin 2026/20**

(21) Numéro de dépôt: **25181192.3**

(22) Date de dépôt: **05.06.2025**

(51) Classification Internationale des Brevets (IPC):
*H04L 9/08* (2006.01)    *H04L 9/00* (2022.01)

(52) Classification Coopérative des Brevets (CPC):
**H04L 9/0833; H04L 9/0836; H04L 9/50**

(54) **PROCÉDÉ DE GESTION D'UN GROUPE PARTAGEANT UNE CLÉ SECRÈTE**

VERFAHREN ZUR VERWALTUNG EINER GRUPPE, DIE EINEN GEHEIMEN SCHLÜSSEL TEILEN

METHOD FOR MANAGING A GROUP SHARING A SECRET KEY

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **12.06.2024 FR 2406249**

(43) Date de publication de la demande:
**17.12.2025 Bulletin 2025/51**

(73) Titulaire: **Commissariat à l'Energie Atomique et
aux Energies
Alternatives
75015 Paris (FR)**

(72) Inventeurs:
• **PAULIN, Dylan**
**38054 GRENOBLE (FR)**
• **HENNEBERT, Christine**
**38054 GRENOBLE (FR)**
• **JAYET, Quentin**
**38054 GRENOBLE (FR)**

(74) Mandataire: **Santarelli
Tour Trinity
1 bis Place de la Défense
92400 Courbevoie (FR)**

(56) Documents cités:
**CN-A- 117 857 033     US-A1- 2019 268 284**

• **LIU QINGYUAN ET AL: "Blockchain-based
Transaction Group Key Management Scheme
For Edge Devices", 2023 IEEE INTERNATIONAL
CONFERENCES ON INTERNET OF THINGS
(ITHINGS) AND IEEE GREEN COMPUTING &
COMMUNICATIONS (GREENCOM) AND IEEE
CYBER, PHYSICAL & SOCIAL COMPUTING
(CPSCOM) AND IEEE SMART DATA
(SMARTDATA) AND IEEE CONGRESS ON
CYBERMATICS (CYBERMATIC, 17 December
2023 (2023-12-17), pages 695 - 702,
XP034596141, DOI: 10.1109/ITHINGS-
GREENCOM-CPSCOM-SMARTDATA-
CYBERMATICS60724.2023.00124**

**Description**

## DOMAINE TECHNIQUE DE L'INVENTION

Le domaine de l'invention est la réalisation d'opérations de manière sécurisée par un ou plusieurs membres d'un groupe. Ces opérations sont notamment l'échange de messages entre les membres du groupe, le contrôle d'accès à des zones sensibles (en utilisant un identifiant unique), etc.

Pour assurer la réalisation de telles opérations de manière sécurisée, de manière connue en soi un secret de groupe, que l'on peut également appeler une clé secrète, peut être partagée par les membres du groupe.

Par conséquent, l'invention plus précisément concerne un procédé de gestion de groupe permettant le partage d'un secret de groupe au sein du groupe.

## ÉTAT DE LA TECHNIQUE

La communication d'informations entre personnes, par exemple au moyen d'une application de messagerie instantanée, nécessite la prise en compte d'un certain nombre de contraintes.

Une telle application peut devoir fournir une garantie de confidentialité au sein de chaque groupe, et protéger les données d'identification des membres, afin de répondre aux différentes règlementations applicables, comme par exemple la Règlementation Globale de Protection des Données à caractère Personnel dans l'Union Européenne.

La réalisation d'une telle application est particulièrement complexe dans un contexte où les membres communiquent via leurs dispositifs personnels, par exemple des smartphones, formant un réseau décentralisé de communications asynchrones.

Pour réaliser une telle application avec un niveau élevé de sécurité des communications, une solution connue consiste à gérer chaque groupe de membres devant échanger des messages de manière sécurisée de telle sorte qu'un secret commun soit partagé entre les membres du groupe.

Ce secret commun servira alors (notamment) à calculer une clé de chiffrement, par exemple symétrique, pour permettre l'échange d'informations entre les membres du groupe de manière sécurisée.

Cela étant, maintenir un secret commun et singulier à chaque groupe permettant à ses membres d'échanger des messages chiffrés connus de eux seuls, de telle façon que ce secret soit mis à jour à chaque nouveau départ ou arrivée d'un membre dans le groupe, tout en assurant aux autres membres du groupe la continuité des échanges confidentiels, requiert d'assurer plusieurs propriétés :

- La continuité de mise à jour (*update*) de la clé de chiffrement du groupe lors de l'arrivée d'un nouveau membre,
- La mise à niveau (*upgrade*) de la clé de chiffrement du groupe lors du départ d'un membre,
- L'accès à tout moment (*continuous access*) à la clé de chiffrement du groupe à tous les membres du groupe.

Des exigences de sécurité peuvent s'ajouter, notamment :

- Que les secrets soient calculés et conservés au niveau de chaque dispositif utilisateur légitime à les connaitre,
- D'éviter les points de défaillance unique dans le système, dont une attaque pourrait compromettre la disponibilité et/ou la confidentialité de la solution,
- D'éviter les attaques de type 'man-in-the-middle' tout en préservant les données d'identification des membres.

Pour permettre qu'un secret cryptographique commun soit partagé entre les membres d'un groupe, il est nécessaire de chiffrer des données afin de les échanger de façon confidentielle au sein du groupe. Cela nécessite un moyen pour partager des informations intermédiaires publiques permettant le calcul du secret commun en privé. Si les dispositifs de communication des membres du groupe sont connectés au sein d'un même réseau, ils peuvent échanger des messages permettant la création du secret commun. Par exemple, à travers internet, des informations publiques (telles que des clés publiques) peuvent être transmises si les adresses IP de chacun des membres du groupe sont connues de tous les autres membres.

Dans la plupart des applications de messagerie existantes, un serveur est utilisé pour l'échange d'informations publiques au sein d'un groupe.

Cependant, un tel serveur centralisé constitue un point de défaillance potentiel unique, particulièrement exposé par conséquences à différentes attaques cyber telles que les attaques par déni de service, attaques de type « *man in the middle* », par *malwares*, etc.

Pour éviter une telle faiblesse, une solution alternative consiste à utiliser la *blockchain* pour permettre le partage d'informations entre deux personnes. De tels procédés de communication sont divulgués par exemple par les demandes de brevet français n°1763393 et n°1763394.

Les procédés divulgués par ces brevets font appel au protocole de Diffie-Hellman pour l'échange d'informations entre deux acteurs. Ce protocole est une procédure permettant la génération d'un secret partagé entre deux personnes, connu seulement de ces deux personnes.

La génération d'une telle clé de session s'appuie sur la possession d'une paire de clés asymétrique par chacune des deux personnes impliquées dans le protocole de Diffie-Hellman. Ainsi en mettant en œuvre ce protocole, une personne disposant d'une paire de clés asymétrique qui lui est propre est en mesure d'initier le calcul d'un secret partagé avec une autre personne disposant elle aussi d'une paire de clés asymétrique qui lui est propre.

Pour la mise en œuvre de ce protocole de Diffie-Hellman, chacune des deux personnes doit disposer d'une paire de clés asymétrique, comprenant une clé privée et la clé publique correspondante (cette paire de clés asymétrique est donc calculée au moyen d'un crypto-système asymétrique).

L'algorithme de cryptographie asymétrique utilisé est généralement un algorithme d'arithmétique modulaire : Le crypto-système peut être un crypto-système de *Rivest-Shamir-Adleman,* RSA), ou fondé sur des courbes elliptiques (*Elliptic Curve Cryptography,* ECC).

Le protocole de Diffie-Hellman comporte les étapes suivantes :

A1) chacune des deux personnes enregistre la clé publique de sa paire de clés asymétrique dans le registre ;
A2) chacune des deux personnes lit dans le registre la clé publique de l'autre ; et
A3) chacune des deux personnes construit le secret partagé.

Le protocole de Diffie-Hellman permet ainsi de générer un secret partagé entre deux personnes. Il est décrit plus en détail dans les demandes de brevet français n°1763393 et n°1763394 citées ci-dessus.

Cependant, les procédés de communication sont limités à l'échange entre deux personnes.

D'autres procédés ont été développés sur la base du protocole de Diffie-Hellman pour permettre l'échange sécurisé d'informations au sein d'un groupe comportant plus de deux personnes. Parmi ces procédés, les plus connus font appel à des représentations du groupe en anneau et en arbre.

Dans ces derniers procédés, la génération d'un secret partagé par le groupe nécessite plusieurs exécutions successives du protocole de Diffie-Hellman. La principale différence entre ces différents procédés est l'organisation et l'ordre d'exécution de ces protocoles.

Cependant, ces derniers procédés ne présentent pas un niveau de sécurité suffisant vis-à-vis des attaques de type « man in the middle ». Les demandes de brevet CN 117857033 A1 et US 2019/268284 divulguent l'intégration de la gestion de clés de groupe avec un système de smart contracts au moyen d'organiser les clés des membres du groupe en arbre binaire et d'implémenter les communications entre ces-derniers à l'aide de smart contracts sur une chaîne à blocs.

Il existe donc un besoin de procédés de communication permettant l'échange d'informations de manière sécurisée entre membres d'un groupe, ces procédés étant robustes vis-à-vis d'attaques de type « man in the middle », et ne nécessitant pas l'utilisation d'un serveur central.

## EXPOSÉ DE L'INVENTION

La présente invention vise à remédier à tout ou partie des inconvénients de l'état de la technique cités ci-dessus.

Pour permettre la réalisation d'applications de messagerie entre membres d'un groupe, ou plus généralement d'applications permettant l'échange d'informations entre membres d'un groupe, selon la présente divulgation, un procédé de gestion de groupe permettant le partage d'un secret de groupe (plus précisément une clé secrète de groupe) au sein du groupe est proposée.

En effet, avantageusement la détention d'une clé secrète de groupe commun au sein d'un groupe permet de déterminer une clé de chiffrement, par exemple symétrique : cela permet alors l'échange d'informations de manière sécurisée entre les membres du groupe.

Selon un premier aspect de l'invention, un premier procédé de gestion d'un groupe est proposé, dans lequel le groupe est suivi à l'aide d'un arbre binaire.

Le procédé est un procédé de gestion d'un groupe comprenant une pluralité de membres, chaque membre détenant ou étant en mesure de détenir une clé secrète de groupe, le procédé faisant appel à un crypto-système asymétrique (Enc,Dec) vérifiant la propriété, pour deux paires de clés asymétriques (PK1,SK1) et (PK2,SK2) :

Enc(PK1,SK2) = Enc(SK1,PK2), où Enc est la fonction de chiffrement du crypto-système, et à un registre dans lequel un *smart contract* est déployé ;
un arbre binaire étant utilisé pour ordonner les membres du groupe ;
chaque membre étant associé à un nœud terminal de l'arbre, ce nœud étant rattaché à un nœud racine de l'arbre, directement ou via une suite d'au moins un nœud, le nœud racine et lorsqu'elle existe ladite suite d'au moins un nœud constituant la chaîne de rattachement du membre considéré ;

chaque membre du groupe disposant d'une paire de clés asymétrique, dont la clé secrète et la clé publique sont considérées comme la clé secrète de nœud et la clé publique de nœud pour le nœud terminal associé au membre ;
la clé publique du nœud racine étant appelée clé publique du groupe ;
le procédé comprenant une procédure d'ajout de membre pour intégrer au groupe un candidat souhaitant rejoindre le groupe,
à un instant donné où
le groupe est constitué par un ensemble de membres, dits membres avant-ajout, formant un arbre avant-ajout,
chaque membre avant-ajout dispose de ou est en mesure de calculer une clé secrète avant-ajout de nœud pour tout nœud de sa chaîne de rattachement ; et

pour chaque nœud de l'arbre avant-ajout, une clé publique avant-ajout de nœud est enregistrée dans le registre ;

la procédure d'ajout de membre comprenant les opérations suivantes :

S10) une demande d'admission dans le groupe du candidat est transmise au *smart contract,* la demande d'admission comprenant un authentifiant et une clé publique personnelle du candidat, le candidat détenant en outre une clé privée personnelle à partir de laquelle sa clé publique personnelle a été calculée au moyen du crypto-système ;

S20) le *smart contract* enregistre dans le registre l'admission dans le groupe d'un nouveau membre ayant l'authentifiant du candidat et la clé publique du candidat ;

S30) le candidat détermine ou obtient du *smart contract* une liste du ou des nœuds de sa chaîne de rattachement dans l'arbre ;

S40) de proche en proche, pour chaque nœud de sa chaîne de rattachement, depuis le nœud de l'arbre auquel il est directement rattaché jusqu'au nœud racine (N1), le candidat calcule la clé secrète de nœud puis la clé publique de nœud ;

S50) le candidat publie dans le registre la ou les clé(s) publique(s) de nœud calculée(s) à l'étape S40 ;

S60) le *smart contract* envoie un message d'ajout de membre au moins à chaque membre actif avant-ajout du groupe ; et

S70) à réception du message d'ajout de membre, de proche en proche, pour chaque nœud de sa chaîne de rattachement qui fait également partie de la chaîne de rattachement du candidat, dans le sens allant du nœud de l'arbre auquel il est directement rattaché vers le nœud racine, chaque membre actif avant-ajout calcule la clé secrète de nœud ;

la clé secrète de nœud d'un nœud donné étant calculée par une personne dont la chaîne de rattachement contient un premier fils du nœud donné:

- si ledit nœud donné a un deuxième fils et que ladite personne a accès à une clé publique non compromise du deuxième fils, en fonction de la clé secrète du premier fils actif et de la clé publique dudit deuxième fils dudit nœud donné ; ou dans tout autre cas,
- en fonction de la clé secrète du premier fils dudit nœud donné.

La méthode définie ci-dessus peut être mise en œuvre avec différents crypto-systèmes, à condition qu'ils vérifient la propriété énoncée ci-dessus (Enc(PK1,SK2) = Enc(SK1,PK2)). Il est ainsi possible de choisir un crypto-système sur courbes elliptique, un crypto-système RSA, ou éventuellement certains crypto-systèmes post-quantiques notamment à base de lattices.

Pour la mise en œuvre du procédé, en outre une règle d'ajout de nouveau membre dans l'arbre (également appelée règle de construction de l'arbre) est choisie préalablement.

Selon la règle qui est choisie, la position dans l'arbre à laquelle un nouveau membre du groupe est ajouté soit peut être calculée simplement à partir de l'information des arrivées et départs successifs des membres du groupe, soit résulte d'un choix. Dans le premier cas, à l'étape S30 le candidat peut déterminer lui-même sa chaîne de rattachement. C'est le cas par exemple si lors de la construction de l'arbre, d'une part en cas de départ d'un membre, aucun nouveau membre ne reprend la position de celui-ci ; et si les candidats sont placés dans l'arbre de telle sorte que tous les membres du groupe, à tout instant, soient placés à un même niveau dans l'arbre, et placés à ce niveau par ordre chronologique de dernière admission dans le groupe. Dans le deuxième cas, la position dans l'arbre affectée à un nouveau membre peut être déterminée par le *smart contract* ; celui-ci communique alors sa chaîne de rattachement au candidat, lors de son admission à l'étape S30.

A l'étape S10, selon le cas, la demande d'admission dans le groupe du candidat peut être transmise au *smart contract* soit directement par le candidat (le groupe est alors dit 'groupe ouvert'), ou soit par une personne chargée de vérifier qu'il y a bien lieu d'admettre le candidat dans le groupe, par exemple un administrateur du groupe.

Avantageusement, à la suite de l'opération d'ajout de membre, chacun des membres du groupe - c'est-à-dire à la fois les membres avant-ajout et le nouveau membre (le candidat) -, dispose de ou est en mesure de calculer la clé secrète de nœud pour tout nœud de sa chaîne de rattachement.

Les membres du groupe sont authentifiés dans le registre par leur adresse de compte qui est un authentifiant, noté accUser. Cet authentifiant sert de manière permanente à identifier le membre lors de ses interactions avec le *smart contract.*

Ainsi, grâce notamment à l'utilisation du *smart contract,* le procédé proposé ci-dessus permet de constituer un groupe partageant une clé secrète de groupe avec un degré de sécurité élevé, seules des informations publiques (des clés publiques) étant transmises pour la constitution de la clé secrète de groupe. Notamment, le procédé proposé avantageusement ne nécessite pas l'utilisation d'un serveur central.

Dans le présent document, les définitions et conventions suivantes sont utilisées.

Un registre, appelé également 'ledger', désigne une structure dans laquelle sont enregistrées des données de manière sécurisée, dans le domaine des technologies de type 'Distributed Ledger Technology'. Un registre est généralement distribué. Un registre peut être ouvert (ou 'permissionless'), c'est-à-dire que toute personne peut consulter les données enregistrées dans le registre. Un exemple typique de registre est une *blockchain,* par exemple de type Bitcoin ou Ethereum.

Un *smart contract* (parfois traduit 'contrat intelligent') est un code prévu pour interagir avec un registre, et enregistré dans celui-ci à une adresse spécifique au *smart contract.* Au moment du minage, les nœuds validateurs exécutent le smart contract ; s'il y a consensus sur le résultat, celui-ci est enregistré dans le registre.

Les expressions 'une nouvelle clé est calculée' ou 'une nouvelle valeur pour la clé est calculée' ont le même sens et peuvent être utilisées de manière interchangeable.

La *blockchain* présente l'avantage d'être décentralisée et ne présente pas de point de défaillance unique. Par ailleurs, la *blockchain* est robuste à la plupart des attaques par déni de service grâce à l'usage de *gas,* aux attaques *man in the middle* grâce à l'usage des adresses de compte comme authentifiants, ainsi qu'aux *malwares* en rendant le contenu du registre transparent et consultable par tous les acteurs.

Ainsi avantageusement, le procédé selon la présente divulgation répond aux exigences protocolaires (*update, upgrade, continuous access)* à travers un procédé performant, efficace et sécurisé.

De plus, le procédé selon la présente divulgation prend également en compte les exigences de sécurité et de protection des données à caractère personnel et des données identifiantes des membres, à travers une architecture novatrice décentralisée s'appuyant sur le *smart contract* exécuté sur une *blockchain.*

Naturellement, un crypto-système de cryptographie asymétrique est défini sur un corps commutatif.

Dans certains modes de mise en œuvre, le procédé comprend en outre une procédure de retrait_d'un membre du groupe, dit membre partant (Up), autre que le membre ayant rejoint le groupe en dernier, pour retirer du groupe le membre partant, ladite procédure de retrait de membre comprenant :

S100) une demande de retrait du membre partant est envoyée au *smart contract ;*

S110) le *smart contract* envoie un message de mise à jour de clés au moins à chaque membre actif restant du groupe, indiquant comme clé(s) à renouveler et comme clé compromise la clé secrète de chacun dudit ou desdits nœuds de la chaîne de rattachement du membre partant ;

S120) chaque membre restant actif, dit membre restant considéré (U2), évalue le nœud, dit premier nœud commun, qui est le nœud de sa chaîne de rattachement qui est le plus éloigné du nœud racine et qui appartient aussi à la chaîne de clés à renouveler ;

S120-1) si la clé publique du premier nœud commun a été renouvelée depuis le message de mise à jour de clés, de proche en proche, le membre restant considéré calcule la clé secrète et la clé publique de nœud du nœud considéré, à partir du premier nœud commun et jusqu'au nœud racine ; inversement,

S120-2) si la clé publique du premier nœud commun n'a pas été renouvelée depuis le message de mise à jour de clés :

S120-22) pour chaque nœud, dit nœud à mettre à jour, situé sur la chaîne de rattachement allant du premier nœud commun au nœud racine, le membre restant considéré calcule la clé secrète et la clé publique de nœud du nœud à mettre à jour, et publie cette dernière dans le registre, ledit nœud à mettre à jour étant alors appelé nœud mis à jour ; tout nœud dont la clé publique est compromise étant considéré comme inexistant lors de tout calcul de clé secrète de nœud ;

S120-24) le *smart contract* envoie un message de mise à jour de nœud au moins à chaque autre membre actif du groupe, c'est-à-dire au moins à chaque membre du groupe, actif, autre que le membre partant et le membre restant considéré, indiquant le nœud mis à jour ;

S120-26) de proche en proche, chaque autre membre calcule la clé secrète de nœud du nœud considéré, pour chaque nœud mis à jour faisant également partie de sa chaîne de rattachement, dans le sens allant du nœud terminal de l'arbre auquel il est rattaché vers le nœud racine.

Ainsi, chaque membre actif restant du groupe dispose de, ou du moins est en mesure de calculer, une clé secrète de groupe pour tous les nœuds de sa chaîne de rattachement. Avantageusement, la (ou les) nouvelle(s) clé(s) secrète(s) de groupe recalculée(s) dans le cadre de cette procédure de retrait ne sont pas accessibles au membre partant.

Pour les membres qui sont inactifs au moment où la procédure de retrait de membre est exécutée, la procédure suivante peut être prévue.

Dans une variante du mode de mise en œuvre décrit ci-dessus, le procédé de gestion d'un groupe comprend en outre comprenant en outre un procédé de reconnexion d'un membre du groupe après retrait d'un membre partant, dans lequel :

S200) lorsqu'un membre du groupe, dit membre se reconnectant, active sa connexion au groupe après une période d'inactivité, le membre se reconnectant consulte les messages reçus du *smart contract ;*

S210) lorsque le membre se reconnectant a reçu du *smart contract* un message de retrait de membre,le membre se reconnectant évalue le nœud, dit premier nœud commun, qui est le nœud de sa chaîne de rattachement qui est le plus éloigné du nœud racine et qui appartient aussi à la chaîne de clés à renouveler:

S210-1) si la clé publique du nœud évalué a été publiée ou renouvelée depuis le message de mise à jour de clés, de proche en proche, le membre se reconnectant calcule la clé secrète et la clé publique de nœud du nœud considéré, à partir du premier nœud commun et jusqu'au nœud racine ; ou inversement,

S210-2) si la clé publique du nœud évalué n'a pas été publiée ou renouvelée depuis le message de retrait de membre :

S210-22) pour chaque nœud, dit nœud à mettre à jour, situé sur la chaîne de rattachement allant du premier nœud commun au nœud racine, le membre se reconnectant calcule la clé secrète et la clé publique de nœud du nœud à mettre à jour et publie cette dernière dans le registre, ledit nœud à mettre à jour étant alors appelé nœud mis à jour ; tout nœud dont la clé publique est compromise étant considéré comme inexistant lors de tout calcul de clé secrète de nœud ;

S210-24) le *smart contract* envoie un message de mise à jour de nœud au moins à chaque autre membre du groupe actif, c'est-à-dire chaque membre du groupe, actif, autre que le membre partant et le membre se reconnectant, indiquant le nœud mis à jour;

S210-26) de proche en proche, chaque autre membre calcule la clé secrète de nœud du nœud considéré, pour chaque nœud mis à jour faisant également partie de sa chaîne de rattachement (de la chaîne de rattachement du membre se reconnectant), dans le sens allant du nœud terminal de l'arbre auquel il est directement rattaché vers le nœud racine (Ns).

Différents modes de calcul peuvent être utilisés pour calculer de nouvelles clés secrètes de nœud en mettant en œuvre le protocole de Diffie-Helman.

Dans certains modes de mise en œuvre, au moins une clé secrète de nœud d'un nœud donné est calculée :

- en calculant un élément cryptographique dit secret partagé de noeud en fonction de la clé secrète d'un premier fils et de la clé publique d'un deuxième fils du nœud donné ; et
- en calculant la clé secrète du nœud donné à partir dudit secret partagé de noeud, par exemple comme étant égale à une partie du secret de nœud.

Grâce à la première étape ci-dessus, le procédé selon la présente divulgation permet plus généralement le calcul d'un secret partagé de groupe, à savoir en l'occurrence le secret partagé de nœud du nœud racine. Les procédures décrites dans la présente divulgation permettent aux membres du groupe de maintenir au fil du temps un secret de groupe partagé, qui est recalculé en fonction notamment des départs et ajouts de membres.

Dans ce qui suit pour simplifier, le 'secret partagé de nœud' est appelé dans certains cas plus simplement 'secret de nœud'.

Dans le premier aspect de l'invention présentée ci-dessus, le groupe est suivi à l'aide d'un arbre binaire. L'arbre binaire permet d'assurer le suivi des membres du groupe de manière relativement simple, et permet notamment de limiter le nombre de recalculs de clés qui sont nécessaires lors du retrait d'un membre.

Une solution alternative de l'invention va maintenant être présentée.

Selon un deuxième aspect de l'invention, un deuxième procédé de gestion d'un groupe est proposé, dans lequel le groupe est suivi à l'aide d'une liste chaînée. Par rapport au suivi par arbre binaire, ce mode de suivi avantageusement simplifie la mise en œuvre du procédé de gestion de groupe. Inversement, avantageusement la gestion des membres du groupe à l'aide d'un arbre binaire selon le premier aspect de l'invention, par rapport à une gestion des membres selon son deuxième aspect permet de réduire la quantité de gas consommée par l'envoi de transactions vers la *blockchain* pour la gestion du groupe (et donc le coût de gestion).

Le deuxième procédé comme le premier procédé combine le recours à un *smart contract* et le partage de clés par protocole de Diffie-Hellman pour permettre le partage d'un secret partagé au sein d'un groupe.

Le deuxième procédé est un procédé de gestion d'un groupe comprenant une pluralité de membres, chaque membre détenant ou étant en mesure de détenir une clé secrète de groupe, le procédé faisant appel à un crypto-système asymétrique (Enc,Dec) vérifiant la propriété, pour deux paires de clés asymétriques (PK1,SK1) et (PK2,SK2) :

Enc(PK1,SK2) = Enc(SK1,PK2), où Enc est la fonction de chiffrement du crypto-système, et à un registre dans lequel un *smart contract* est déployé ;
une liste étant utilisée pour ordonner les membres du groupe ;
le procédé comprenant une procédure d'ajout de membre pour intégrer au groupe un candidat souhaitant rejoindre le groupe,
à un instant donné où
le groupe est constitué par un ensemble de membres, dits membres avant-ajout,
chaque membre avant-ajout dispose de ou est en mesure de calculer une clé secrète avant-ajout du groupe avant-ajout ; et
une clé publique avant-ajout du groupe avant-ajout est enregistrée dans le registre ;

dans laquelle la procédure d'ajout de membre comprend les opérations suivantes :

S310) une demande d'admission dans le groupe du candidat est transmise au *smart contract,* la demande d'admission comprenant un authentifiant et une clé publique personnelle du candidat, le candidat détenant en outre une clé privée personnelle à partir de laquelle sa clé publique personnelle a été calculée au moyen du crypto-système ;
S320) le *smart contract* enregistre dans le registre l'admission dans le groupe d'un nouveau membre du groupe ayant l'authentifiant du candidat et la clé publique du candidat ;
S330) à partir de la clé publique avant-ajout du groupe avant-ajout et de sa clé privée personnelle le candidat calcule une nouvelle valeur de clé secrète du groupe puis une nouvelle valeur de clé publique du groupe pour le groupe ;
S340) le candidat publie dans le registre la nouvelle valeur de clé publique du groupe (PKgroup n+1) calculée à l'étape S330 ;
S350) le *smart contract* envoie un message de mise à jour de clé de groupe au moins à chaque membre actif avant-ajout du groupe ; et
S360) à réception du message de mise à jour de clé de groupe, à partir de la clé secrète avant-ajout du groupe avant-ajout et de la clé publique personnelle du candidat, chaque membre avant-ajout actif calcule la nouvelle valeur de clé secrète du groupe.

Par construction, la liste des membres du groupe est ordonnée dans l'ordre chronologique de leurs dates d'admission ou plutôt de leurs dates de dernière admission dans le groupe.

Les positions ou index dans le groupe des membres du groupe peuvent être indexées par un index suivi par le *smart contract.*

Dans certains modes de mise en œuvre du procédé de gestion d'un groupe, au plus tard peu après une reconnexion d'un membre du groupe ayant été inactif, ou sur demande de celui-ci lors de la reconnexion de celui-ci, lorsque la procédure d'ajout de membre a été exécutée, le smart contract envoie un message de mise à jour de clé de groupe après ajout d'un membre audit membre ayant été inactif ; et le procédé de gestion de groupe comprend en outre un procédé de reconnexion dudit membre ayant été inactif après ajout d'un membre, dans lequel :

S400) lorsque ledit membre ayant été inactif se reconnecte au groupe, il consulte les messages reçus du *smart contract ;*
S410) lorsque le membre se reconnectant a reçu du *smart contract* un message de mise à jour de clé de groupe après ajout d'un membre, à partir de la clé secrète avant-ajout du groupe avant-ajout et de la clé publique personnelle du candidat, ledit membre ayant été inactif calcule la nouvelle valeur de clé secrète du groupe.

Dans certains modes de mise en œuvre, le procédé comprenant en outre une procédure de retrait d'un membre du groupe, dit membre partant, autre que le membre ayant rejoint le groupe en dernier, pour retirer du groupe le membre partant, ladite procédure de retrait de membre comprenant :

S500) une demande de retrait du membre partant est envoyée au *smart contract ;*
S510) le *smart contract* identifie un membre, dit membre d'initialisation, qui est un membre actif du groupe ayant rejoint le groupe avant le membre partant ;

S520) le *smart contract* envoie un message de nouvel ajout au groupe à chaque membre actif du groupe ayant rejoint le groupe après le membre d'initialisation, dit membre à réintégrer, à l'exception du membre partant, invitant celui-ci à se joindre à nouveau au groupe ;

S530) à réception du message de nouvel ajout au groupe, pour chaque membre à réintégrer (Up), les étapes S330 à S360 de la procédure d'ajout de membre sont effectuées, en considérant le membre à réintégrer comme étant le candidat.

Au cas où le membre partant est le dernier membre qui a rejoint le groupe, dans certains modes de mise en œuvre, le *smart contract* envoie un message à chaque membre du groupe, l'informant que la clé secrète antérieure du groupe doit être utilisée comme nouvelle clé de groupe.

Dans certains modes de mise en œuvre, au moins une nouvelle clé secrète de groupe est calculée :

- en calculant un élément cryptographique dit secret partagé de groupe en fonction de la clé secrète d'un membre du groupe et d'une clé publique du groupe, ou encore en fonction en fonction de la clé publique d'un membre du groupe et d'une clé secrète du groupe ; et
- en calculant la nouvelle clé secrète du groupe à partir dudit secret partagé de groupe, par exemple comme étant égale à une partie du secret partagé de groupe.

Lorsque le secret partagé de groupe est un vecteur, par exemple un vecteur de coordonnées d'un point d'une courbe, notamment une courbe elliptique, la clé secrète de groupe peut inclure ou être une composante de ce vecteur.

Dans le premier comme dans le deuxième aspect de l'invention, dans certains modes de mise en œuvre, lorsqu'une nouvelle clé publique de groupe est enregistrée dans le registre, le smart contract assigne un statut 'Aveugle' à tous les membres restants autres que le membre, dit membre de mise à jour de groupe, ayant déclenché cet enregistrement ; lorsqu'un membre autre que le membre déclencheur calcule la clé secrète de groupe, il en informe le smart contract ; sur cette base, celui-ci assigne un statut 'En-ligne' audit membre autre ; et le procédé comporte au moins une procédure mise en œuvre à l'aide du smart contract, autre qu'une procédure d'ajout ou de retrait de membre, dans laquelle au moins une action du smart contract est réalisée en fonction du statut du membre.

Par exemple, le procédé de gestion peut prévoir qu'un membre n'est pas autorisé à consulter ses messages antérieurs via le *smart contract* s'il est en statut Aveugle.

Inversement, lorsqu'ultérieurement ce membre récupérera le statut En-ligne, il sera alors autorisé à effectuer toute action qu'il était autorisé à effectuer pendant sa période d'inactivité, même si pendant une certaine période le membre a été en mode 'Aveugle'.

Dans certains modes de mise en œuvre, une procédure spécifique est prévue pour la récupération de messages échangés pendant la période intermédiaire (en statut 'Aveugle').

Dans ces modes de mise en œuvre le procédé de gestion comporte en outre une procédure d'obtention rétroactive par un membre en reconnexion suite à une période d'inactivité d'au moins une clé secrète de groupe à obtenir, qui avait été une clé courante du groupe pendant ladite période d'inactivité, ladite procédure d'obtention rétroactive comportant les étapes suivantes :

S600) à partir d'informations publiées dans le registre et/ou en interrogeant le *smart contract,* le membre en reconnexion détermine un authentifiant d'un membre détenteur de clé auprès duquel il peut obtenir ladite au moins une clé secrète à obtenir ;

S610) le membre en reconnexion demande au membre détenteur de clé de lui fournir ladite au moins une clé secrète à obtenir ;

S620) le membre détenteur de clé vérifie que le membre en reconnexion était membre du groupe à un moment où ladite au moins une clé secrète demandée était la clé secrète courante du groupe, et que le membre en reconnexion fait toujours partie du groupe.

S630) si le résultat de la vérification est positif, le membre détenteur de clé considéré ouvre un canal de communication auxiliaire sécurisé avec le membre en reconnexion, par exemple en suivant le protocole indiqué par la demande de brevet français n°1763394 ; et

S640) par le canal de communication auxiliaire sécurisé ainsi ouvert, le membre détenteur de clé considéré fournit au membre en reconnexion ladite au moins une clé secrète à obtenir demandée.

Dans le premier ou le deuxième aspect de l'invention, avantageusement la procédure de retrait peut être mise en œuvre quel que soit l'ordre dans lequel les membres devant exécuter à nouveau la procédure d'ajout de membre exécutent cette procédure d'ajout de membre. De plus, cette procédure permet le fonctionnement continu du groupe, qui peut avoir lieu même si une partie des membres ayant à exécuter à nouveau la procédure d'ajout de membre ne l'ont pas encore exécutée (leur terminal étant éteint, par exemple).

Dans le premier ou le deuxième aspect de l'invention, dans certains modes de mise en œuvre, le procédé de gestion de groupe comprend en outre une étape au cours de laquelle au moins un membre actif du groupe calcule une clé symétrique de groupe à partir d'une clé secrète de groupe.

Cette étape permet aux membres du groupe de disposer d'une clé symétrique partagée par tous les membres du groupe. Une telle clé permet la mise en œuvre de certains protocoles, notamment des protocoles de communication, et cela de manière plus légère qu'une clé asymétrique comme la clé secrète de groupe.

Ces protocoles peuvent être notamment des protocoles de chiffrement de messages tels qu'AES.

La clé symétrique peut être calculée de différentes manières.

Ainsi dans certains modes de mise en œuvre, pour calculer ladite clé symétrique de groupe, ledit au moins un membre actif du groupe :

- calcule un élément cryptographique dit secret partagé de groupe en fonction de sa clé secrète et d'une clé publique du groupe, ou encore en fonction de la clé publique d'un membre du groupe et d'une clé secrète du groupe ; et
- calcule la clé symétrique du groupe à partir dudit secret partagé de groupe, par exemple comme étant égale à une partie du secret de groupe.

Par extension, selon un troisième aspect, l'invention concerne également un procédé de communication chiffrée au sein d'un groupe, comprenant les étapes suivantes :

A. on constitue le groupe en mettant en œuvre l'un quelconque des procédés de gestion de groupe présentés précédemment ;
B. au moins un membre du groupe calcule une clé symétrique de groupe à partir de la clé secrète de groupe ; et
C. ce membre reçoit un message et déchiffre celui-ci à l'aide de la clé symétrique de groupe, ou chiffre un message à l'aide de la clé symétrique de groupe et envoie celui-ci.

Ainsi, du fait que chaque membre du groupe est en mesure de calculer la clé secrète de groupe et de construire la clé symétrique qui s'en déduit, chaque membre du groupe est en mesure de lire les messages échangés au sein du groupe, en déchiffrant ceux-ci à l'aide de la clé symétrique de groupe.

Dans certains modes de mise en œuvre, à l'étape S50, le membre construit une clé secrète de groupe (la clé secrète du nœud racine) ; puis il calcule une paire de clés asymétrique de groupe à partir d'une 1$^{ère}$ partie du secret de groupe, et une clef symétrique de groupe à partir d'une 2$^{ème}$ partie du secret de groupe.

Le chiffrement ou le déchiffrement d'information est fait à l'aide de la clé symétrique de groupe.

Lorsque le crypto-système est fondé sur une courbe elliptique, l'une des composantes (sur x ou respectivement sur y) peut être utilisée pour construire la clé symétrique, et l'autre composante est utilisée pour calculer la paire de clés asymétrique.

## BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :

- La figure 1 est une vue schématique d'un groupe de personnes mettant en œuvre un procédé de partage de secret de groupe selon la présente divulgation ;
- la figure 2 est une représentation schématique d'un arbre utilisé pour ordonner les membres d'un groupe, lors de la mise en œuvre d'un procédé selon le premier aspect de la présente divulgation ;
- la figure 3 est une représentation schématique d'un arbre utilisé pour ordonner les membres du groupe, lors de l'exécution d'une procédure d'ajout de membre durant la mise en œuvre d'un procédé selon le premier aspect de la présente divulgation ;
- la figure 4 est une représentation schématique d'un arbre utilisé pour ordonner les membres du groupe, lors de l'exécution d'une procédure de retrait de membre durant la mise en œuvre d'un procédé selon le premier aspect de la présente divulgation ;
- la figure 5 est une représentation schématique d'un arbre utilisé pour ordonner les membres d'un groupe, lors de l'exécution d'une procédure d'ajout de membre durant la mise en œuvre d'un procédé selon le deuxième aspect de la présente divulgation ;
- la figure 6 est une représentation schématique d'un arbre utilisé pour ordonner les membres d'un groupe, lors de l'exécution d'une procédure de retrait de membre durant la mise en œuvre d'un procédé selon le deuxième aspect de la présente divulgation ;

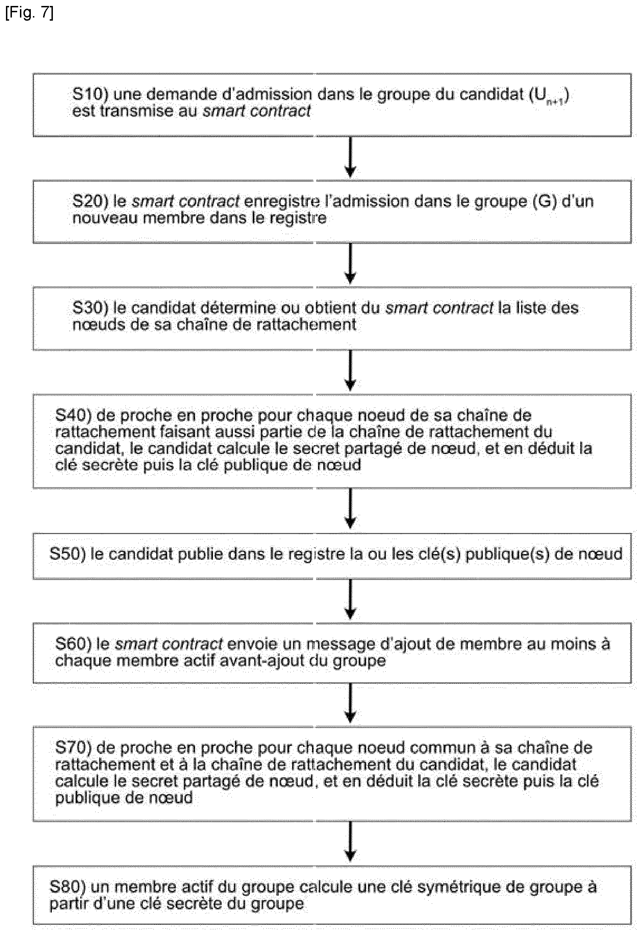

- la figure 7 est un logigramme présentant les étapes d'une procédure d'ajout de membre, dans un procédé de gestion de groupe selon le premier aspect de la présente divulgation ;
- la figure 8 est un logigramme présentant les étapes d'une procédure de retrait de membre, dans un procédé de gestion de groupe selon le premier aspect la présente divulgation ;
- la figure 9 est un logigramme présentant les étapes d'une procédure de reconnexion d'un membre qui se reconnecte après le retrait d'un membre du groupe, dans un procédé de gestion de groupe selon le premier aspect la présente divulgation ;
- la figure 10 est un logigramme présentant les étapes d'une procédure d'ajout de membre, dans un procédé de gestion de groupe selon le deuxième aspect la présente divulgation ;
- la figure 11 est un logigramme présentant les étapes d'une procédure de retrait de membre, dans un procédé de gestion de groupe selon le deuxième aspect la présente divulgation ;
- la figure 12 est un logigramme présentant les étapes d'une procédure d'obtention rétroactive de clé secrète, dans un procédé de gestion de groupe selon la présente divulgation ; et
- la figure 13 est un logigramme présentant les étapes d'un procédé de communication chiffrée au sein d'un groupe, faisant appel à un procédé de gestion de groupe selon la présente divulgation.

## DESCRIPTION DÉTAILLÉE DE L'INVENTION

Des exemples non limitatifs de procédés de gestion de groupe et de procédés de communication correspondants selon la présente divulgation vont maintenant être présentés.

## CARACTERISTIQUES GENERALES DU PROCEDE

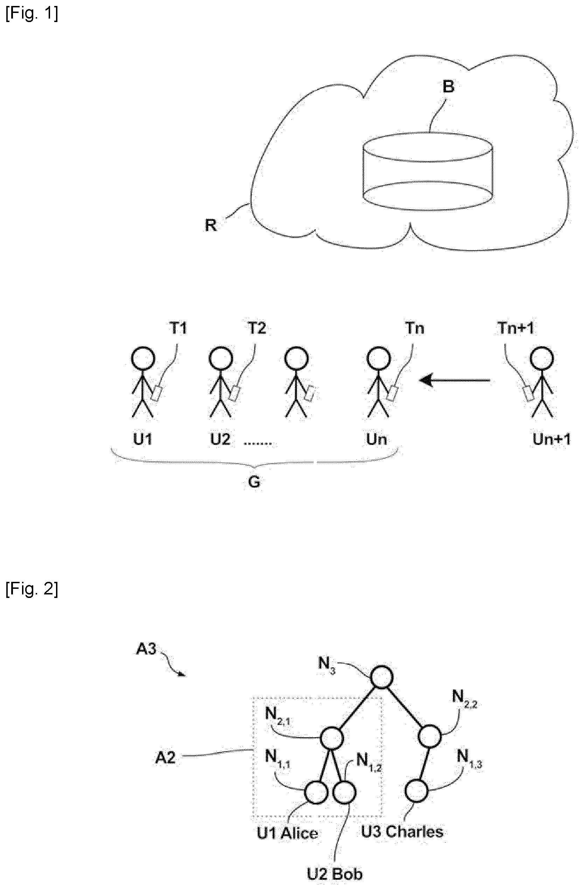

Les procédés de gestion de groupe selon la présente divulgation concernent notamment des groupes constitués pour pouvoir échanger des messages, comme celui illustré par la Fig. 1.

Cette figure montre un ensemble de personnes {U1, U2, U3,... Un}, chaque personne étant notée Ui (i=1... n). Ces personnes constituent le groupe G à l'instant considéré. Une personne Un+1, non-membre du groupe G, cherche à rejoindre celui-ci. Chacune de ces personnes, qui peut être un être humain ou une machine, dispose de (ou comporte) un terminal Ti (i=1... n). Chaque terminal est un appareil électronique capable d'envoyer et de recevoir des messages aux autres personnes via un réseau R, internet par exemple, représenté sous forme d'un nuage sur la Fig.1. Chaque terminal peut être par exemple un téléphone portable, un ordinateur, etc. La personne Un+1 dispose également d'un terminal de ce type, Tn+1.

Chaque terminal comporte au moins un processeur capable d'exécuter des applications informatiques et une mémoire. La mémoire contient au moins une application de communication, qui est utilisée pour l'échange de messages avec les terminaux des autres membres du groupe.

Bien que dans certains modes de mise en œuvre, les terminaux puissent être configurés pour être en permanence en mesure d'échanger des messages, le plus souvent chaque terminal peut être soit dans un mode 'actif', ou 'allumé', dans lequel il est en mesure d'échanger des messages avec le réseau, ou dans un mode 'inactif', ou 'éteint', dans lequel il ne peut pas échanger des messages. Le terme 'message' inclut tout échange d'informations, notamment des informations de mise à jour du terminal.

Le groupe G est constitué pour pouvoir échanger des messages de manière confidentielle. Dans ce but, un élément cryptographique appelé secret partagé de groupe $NPK_{Group\,p}$ est partagé entre membres du groupe. Ce secret partagé de groupe est recalculé lors d'opérations de 'mise à jour du groupe' lorsque cela est nécessaire conformément aux procédures des procédés de gestion de groupe selon la présente divulgation ; à chaque mise à jour du groupe, son indice p est incrémenté. Le secret partagé de groupe varie donc au cours du temps, adoptant d'abord une valeur initiale $NPK_{Group1}$, puis une valeur $NPK_{Group2}$, jusqu'à une valeur $NPK_{Group\,p}$ lors à l'issue du p-ième calcul du secret partagé de groupe.

Un crypto-système asymétrique est choisi pour le groupe pour permettre le partage du secret entre les membres du groupe en mettant en œuvre les procédés selon la présente divulgation.

Ce crypto-système peut être un crypto-système de courbe elliptique, utilisant par exemple les paramètres (p, a, b, G, n et h). Ces paramètres sont publics. De manière alternative, le crypto-système du groupe peut être également un crypto-système RSA ; un crypto-système comprenant des codes correcteurs ; un crypto-système post-quantique, notamment à base de lattices ; etc.

Un registre, en l'occurrence une *blockchain* B, est utilisé pour assurer l'enregistrement et la communication de certaines informations entre les terminaux Ti, conformément à la présente divulgation. Ce registre peut être une *blockchain* publique (tout le monde peut y accéder) ou privée (il faut être authentifié et autorisé pour y accéder).

Le registre est mis en œuvre à l'aide de serveurs, chaque serveur étant un ordinateur.

Les procédés de gestion de groupe selon la présente divulgation vont maintenant être présentés.

**PREMIER ASPECT**

A titre d'exemple, un mode de mise en œuvre de procédés suivant le premier aspect de la présente divulgation va maintenant être présenté en relation avec les Figs. 2 à 4.

Dans ce mode de mise en œuvre, un arbre binaire A est utilisé pour la gestion du groupe.

Sur la Fig.2 est représenté à titre d'exemple un arbre A qui représente de manière schématique un groupe G. Comme on le voit sur cette figure, à l'instant considéré le groupe G comporte 3 membres : U1, Alice ; U2, Bob ; et U3, Charles.

L'arbre A varie au cours du temps en fonction des admissions et des départs de membres, chaque admission ou départ entraînant au moins une mise à jour du groupe. Chaque mise à jour du groupe comporte une mise à jour de l'arbre et des variables cryptographiques associées.

Dans l'arbre A, chaque nœud est noté Nj,k, où j est le niveau du nœud dans l'arbre, et k l'indice du nœud au niveau j considéré de l'arbre. Le nœud unique existant au niveau supérieur s de l'arbre, noté Ns,1 ou plus simplement Ns, constitue le nœud racine de l'arbre.

L'arbre A étant un arbre binaire, chaque nœud comporte zéro, un ou deux fils. Les nœuds terminaux sont appelés 'feuilles' ; à chaque feuille de l'arbre est associé un membre du groupe.

Dans l'arbre A, un secret partagé de nœud NPKj,k,p et une paire de clés asymétrique de nœud comportant une clé secrète SKj,k,p et une clé publique PKj,k,p sont associés à chaque nœud Nj,k ; p étant l'indice courant (c'est-à-dire, à l'instant considéré) du secret de groupe.

La clé publique PKj,k,p peut être calculée à partir de la clé secrète SKj,k,n à l'aide du crypto-système choisi pour le groupe, de manière connue en soi. La clé secrète SKs,1,p associée au nœud racine Ns est la clé secrète de groupe SK$_{group\,p}$.

Dans l'exemple de mise en œuvre présenté ici, le crypto-système choisi pour le groupe est un crypto-système de courbe elliptique, utilisant les paramètres (p, a, b, G, n et h).

La clé secrète de nœud SKj,k,p est dérivée du secret de nœud NPKj,k,p par une fonction de dérivation. Toute fonction de dérivation appropriée peut être choisie ; et notamment, toute fonction de dérivation qui génère la clé secrète de nœud SKj,k,p en fonction d'au moins une partie de l'information contenue dans le secret de nœud NPKj,k,p.

La fonction de dérivation peut être simplement la fonction identité (la clé secrète de nœud est alors égale au secret de nœud).

La fonction de dérivation doit naturellement être détenue par toute personne qui a à calculer une nouvelle valeur de la clé secrète de nœud.

Dans le mode de réalisation présente ici, pour un nœud Nj,k ('nœud père') ayant deux fils, la nouvelle valeur du secret de nœud et la nouvelle valeur SKj,k,p+1 de la clé secrète du nœud Nj,k sont calculées de la manière suivante lors d'une mise à jour du groupe d'indice p+1 :

On fait l'hypothèse qu'au moment de cette mise à jour, les deux fils du nœud Nj,k sont les nœuds Nj-1,k1-1 et Nj-1,k1.

La nouvelle valeur pour le secret de nœud NPKj,k,p+1 est calculée par une fonction de chiffrement combinant la clé publique de l'un des fils et la clé secrète de l'autre fils. Cette fonction est toute fonction de chiffrement Enc d'un crypto-système asymétrique (Enc,Dec) qui vérifie la propriété, pour deux paires de clés asymétriques (PK1,SK1) et (PK2,SK2) :

$$Enc(PK1,SK2) = Enc(SK1,PK2),$$

Dans le cas présent, le secret de nœud peut donc être calculé indifféremment par l'une ou l'autre des formules suivantes :

NPKj,k,p+1 = Enc (SKj-1,k1,p ; PKj-1,k1,p) = SKj-1,k1,p • PKj-1,k1,p = Enc (PKj- 1,k1,p ; SKj-1,k1,p) = PKj-1,k1,p • SKj-1,k1,p

Cette propriété permet qu'une personne dont la chaîne de rattachement contient un des nœuds fils Nj-1,k1-1 ou Nj-1,k1, et qui pour cette raison détient la clé secrète de ce nœud fils calcule une nouvelle valeur (d'indice p+1) du secret partagé de nœud pour le nœud père Nj,k.

Conventionnellement, la clé secrète SKj,k,p+1 pour le nœud Nj,k, est déduite du secret partagé de nœud comme étant égale à la composante sur x de NPKj-1,k1,p :

$$SKj,k,p+1 = NPKj,k,p(x).$$

La clé publique correspondante du nœud N2,1 est obtenue à partir de la clé secrète SK2,1,2 par la formule :

PK2,1,2 = SK2,1,2 • G.

Dans cette équation :

- l'opérateur '•' indique l'opération de multiplication dans l'espace des courbes elliptiques, qui peut être mise en œuvre par une addition répétée le nombre de fois indiquées par le scalaire. Par conséquent la clé publique PK2,1,2 indiquée par l'opération de multiplication ci-dessus est égale à (((G + G) + G) + ... + G), l'addition est répétée SK2,1,2 fois, l'opération d'addition '+' étant définie dans l'espace des courbes elliptiques ; et
- G est le point générateur sur la courbe elliptique considérée, qui permet de générer tous les points de la courbe elliptique dans l'espace discrétisé.

La composante en y de NPK2,1,2 est alors choisie comme clé symétrique EncK2 pour les échanges de messages dans le groupe G2 : EncK2 = NPK2,1,2(y).

La procédure ci-dessus permet de calculer les éléments cryptographiques d'un nœud père Nj,k, à partir de la clé secrète de l'un des nœuds fils Nj-1,k1-1 ou Nj-1,k1, la clé publique de l'autre nœud fils étant disponible sur le registre, pour un nœud quelconque Nj,k ayant deux fils.

D'autres fonctions peuvent être choisies pour dériver une clé secrète du nœud père à partir de la clé secrète de l'un des fils du noeud père et de la clé publique de l'autre nœud fils. De manière générale, toute fonction utilisable (ou utilisée) pour la mise en œuvre du protole de Diffie-Helman peut être utilisée pour réaliser cette fonction.

Si inversement un nœud père Nj,k a un seul fils Nj-1,k1, la clé secrète SKj,j,p+1 du nœud Nj,k est calculée lors d'une mise à jour en fonction de la seule clé secrète de son fils SKj-1,k1,p+1, par exemple en étant égale à celle-ci : SKj,k,p+1 = SKj-1,k1,p+1.

Avantageusement cette procédure peut être répétée par un membre du groupe de proche en proche pour calculer successivement les éléments cryptographiques, et notamment les clés secrètes, de tous les nœuds de sa chaîne de rattachement, dans le sens allant du nœud terminal associé au membre jusqu'au nœud racine.

Dans les paires de clés asymétriques associées aux différents nœuds, les clés publiques sont enregistrées dans le registre et donc sont librement accessibles (du moins pour les membres ayant accès au registre). Inversement, comme cela va être détaillé ci-dessous, pour chaque nœud, seul(s) le(s) membre(s) dont la chaîne de rattachement contient le nœud disposent de ou ont les moyens de reconstituer la clé secrète de nœud du nœud.

Ajout de membres

Les modalités d'admission de nouveaux membres dans le groupe G suivant le procédé de gestion va maintenant être présentée dans le cadre des premières phases de la constitution du groupe G.

De manière générale, l'admission d'un nouveau membre dans le groupe entraîne l'exécution d'une procédure d'ajout de membre, et optionnellement l'exécution d'une ou plusieurs procédures de reconnexion. La procédure d'ajout de membre entraîne une mise à jour du groupe et donc le recalcul du secret de groupe. La procédure de reconnexion permet donc le cas échéant à des membres du groupe inactifs au moment où la procédure d'ajout de membre a été exécutée de pouvoir obtenir le nouveau secret de groupe et donc de joindre à nouveau le groupe.

Au cours d'une phase d'initialisation (p=1), le 1er membre U1 du groupe, Alice, crée le groupe G en déployant un *smart contract* SC dans le registre B. Alice devient donc l'administrateur du groupe.

A l'aide du crypto-système, Alice génère son couple de clés asymétrique personnel, noté SKAlice/PKAlice. Alice enregistre sa clé publique PKAlice dans le registre et est enregistrée par le *smart contract* comme ayant le statut 'En-ligne'.

Cet enregistrement peut être réalisé de différentes manières.

Si le registre est une *blockchain* de type Bitcoin, une clé publique éphémère peut être enregistrée dans la *blockchain* en utilisant le script OP_s du protocole Bitcoin. Une telle utilisation de ce script peut être mise en œuvre en s'inspirant de la demande de brevet français n°1763393. Le contenu de la *Blockchain* étant accessible aux membres du groupe, chacun de ceux-ci accède aux clés publiques ainsi déposées à partir de la connaissance de son adresse de compte qui prouve l'appartenance de la clé.

Si le registre est une *blockchain* de type Ethereum, la clé publique éphémère peut être enregistrée dans la *blockchain* en utilisant un *smart contract.* Un tel mode de mise en œuvre peut être réalisé en s'inspirant de la demande de brevet français n°1763394.

La clé secrète d'Alice constitue le secret de groupe d'indice p=1 :

$$SK_{group\ 1} = SKAlice.$$

Dans une deuxième phase, Bob rejoint le groupe en tant que deuxième membre U2, ce qui entraîne une mise à jour du groupe (p=2).

A l'aide du crypto-système Bob génère son couple de clés asymétrique personnel, noté SKBob/PKBob.

Les clés publiques PKAlice et PKBob sont respectivement dérivées des clés secrètes SKAlice et SKBob, par les formules suivantes :

$$PK_{Alice} = SK_{Alice} \bullet G \text{ et } PK_{Bob} = SK_{Bob} \bullet G$$

où G est le point générateur du crypto-système de courbe elliptique représenté par les paramètres (p, a, b, G, n et h).

Bob détient par ailleurs un authentifiant accuU2 qui lui permet de s'authentifier auprès du *smart contract* SC.

La procédure d'ajout de membre est exécutée pour permettre l'admission de Bob :

A l'étape S10, Bob transmet au *smart contract* SC sa demande d'admission dans le groupe en joignant son authentifiant accuU2 et sa clé publique $PK_{Bob}$ à sa demande.

A l'étape S20, le *smart contract* enregistre dans le registre l'admission dans le groupe G d'un nouveau membre ayant l'authentifiant accuU2 et la clé publique PKBob.

Au vu des informations contenues dans le registre, Bob détermine alors (étape S30) que sa chaîne de rattachement dans l'arbre A contient uniquement le nœud racine N2,1.

A l'étape S40, Bob calcule la clé secrète de nœud pour ce nœud à partir de sa clé privée personnelle SKBob et de la clé publique d'Alice PKAlice :

- Bob calcule le secret de nœud, NPK2,1,2 : NPK2,1,2 = $SK_{Bob} \bullet PK_{Alice}$
- Il en déduit alors la clé secrète SK2,1,2 pour le nœud N2,1 , qui est la composante sur x de NPK2,1,2 : SK2,1,2 = $SK_{group\ 2}$ = NPK2,1,2(x).
- Il calcule alors la clé publique PK2,1,2 à partir de la clé secrète SK2,1,2 : PK2,1,2 = SK2,1,2 • G.
- Il en déduit alors la clé symétrique courante EncK2 pour les échanges de messages dans le groupe G, qui est la composante sur y de NPK2,1,2 : EncK2 = NPK2,1,2(y).

A l'étape S50, Bob publie dans le registre la clé publique de groupe PK2,1,2 qu'il vient de calculer. Bob a le statut 'En-ligne', alors qu'Alice est placée en statut 'Aveugle'.

A l'étape S60 le *smart contract* envoie à Alice un message de mise à jour de clé de groupe.

A l'étape S70, à réception de ce message, Alice détermine la ou les clés secrètes de nœud qu'elle doit recalculer : ce sont les clés secrètes des nœuds communs à sa chaîne de rattachement et à la suite du rattachement de Bob, c'est-à-dire le nœud N2,1.

Alice calcule donc alors à son tour la clé secrète du nœud N2,1 en suivant la procédure présentée précédemment. Grâce à la propriété de commutativité des crypto-systèmes à courbe elliptique, elle obtient la même valeur pour la clé secrète SK2,1,2 que celle calculée par Bob. Elle en informe le *smart contract* et est placée à nouveau en statut 'En-ligne'.

Elle calcule également la clé symétrique de communication de groupe, EncK2, par la formule : EncK2 = NPK2,1,2(y).

Alice et Bob échangent alors des messages en utilisant la clé symétrique de communication EncK2 comme clé de chiffrement des messages qu'ils échangent.

Ces messages peuvent être chiffrés par tout algorithme de chiffrement symétrique connu comme par exemple AES.

Dans une troisième phase, Charles rejoint le groupe en tant que troisième membre U3.

Il est ajouté au niveau 1 au nœud N1,3. Un nœud N2,2 et un nouveau nœud racine N3,1 (ou N3) sont créés afin que Charles puisse avoir une chaîne de rattachement s'étendant jusqu'au nœud racine. Le nœud N2,1 est le premier fils du nœud racine N3, et le nœud N2,2 le deuxième fils de celui-ci.

La chaîne de rattachement de Charles comprend les nœuds N2,2 et N3.

La procédure d'ajout de membre présentée précédemment est alors exécutée pour permettre l'admission de Charles dans le groupe G.

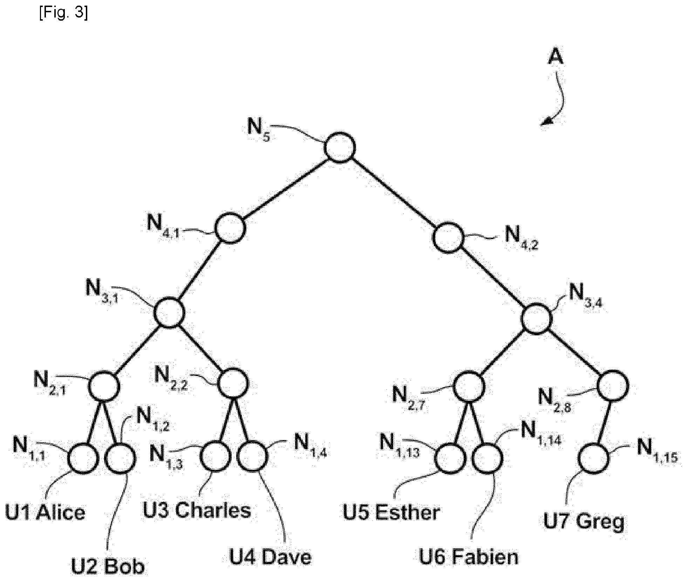

La procédure d'ajout de membre dans le groupe G va maintenant être présentée de manière plus générale dans l'exemple illustré par la Fig.3.

Cette procédure va être illustrée à un instant où le groupe est le groupe G présenté précédemment, à un indice de mise à jour p.

A l'instant considéré, le groupe G comporte six membres Ui, i=1...6 appelés Alice, Bob, Charles, Dave, Esther et Fabien, intégrés à l'arbre A.

Un candidat U7, Greg, veut rejoindre le groupe.

Pour lui permettre de devenir membre du groupe, la procédure d'ajout de membre est exécutée pour Greg.

Les membres sont ajoutés à l'arbre A en respectant les règles de constitution de l'arbre A. Tout ensemble de règles approprié peut être choisi pour la constitution de l'arbre. Cet ensemble de règles est choisi de manière à permettre à chaque membre du groupe à tout moment, à partir du registre, de connaître la structure de l'arbre. Cet ensemble de règles peut être public : chaque membre du groupe, à tout moment, à partir du registre, peut connaître la structure de l'arbre. De manière alternative, il peut être privé. Il est alors connu au moins du *smart contract* : c'est alors le *smart contract* qui informe les membres de leur chaîne de rattachement et le cas échéant des autres informations qui leur sont nécessaires relatives à la structure de l'arbre.

L'admission d'un nouveau membre, comme cela va être détaillé, entraîne dans certains cas l'ajout d'un niveau supplémentaire dans l'arbre, et/ou l'ajout d'un ou plusieurs nouveau(x) nœud(s), et dans tous les cas l'ajout d'une nouvelle feuille correspondant au nouveau membre. A l'instant considéré, l'arbre A6 comporte les 6 membres U1-U6, et 14 nœuds correspondants référencés N1,1 ; N1,2 ; N1,13; N1,14 ; N2,1 ; N2,2 ; N2,7 ; N3,1 ; N3,4 ; N4,1 ; N4,2 ; N5.

Dans le cas présent, les règles de constitution du groupe incluent une règle de non-remplacement dans l'arbre des membres partants et par conséquent, l'arbre n'est pas complet. Ainsi certains nœuds, comme les nœuds N3,2 et N4,2 ont un seul fils ou même sont manquants, suite au fait que les membres du groupe qui étaient rattachés à ces nœud ont quitté le groupe.

Les règles de constitution de l'arbre imposent de plus que chacun des membres (U1-U6) du groupe soit nécessairement rattaché à un nœud de niveau 1 (Cependant dans d'autres modes de réalisation des membres peuvent être rattachés à des nœuds de niveau supérieur. Par exemple, le nouveau membre pourrait être rattaché au nœud N4,1).

Du fait de cette règle, le nouveau membre U7 est ajouté dans l'arbre au niveau 1, dans la position d'indice immédiatement supérieur à la position du dernier membre admis, U6, encore présent dans le groupe. Comme l'arbre A lors de la mise à jour courant (d'indice p) ne contenait pas de nœud N2,8, le nœud N2,8 est créé. Le membre U7 est donc ajouté à un nœud N1,15. Grâce à la création du nœud N2,8, il possède une chaîne de rattachement complète constituée des nœuds N2,8 ; N3,4 ; N4,2 et N5.

Chacun des membres U1-U6 dispose d'une paire de clés asymétrique comprenant une clé secrète ESKi et une clé publique EPKi dérivée de la clé secrète ESKi à l'aide du crypto-système asymétrique, soit respectivement des paires de clés $SK_{Alice}/PK_{Alice}$, $SK_{Bob}/PK_{Bob}$, $SK_{Charles}/PK_{Charles}$, $SK_{Dave}/PK_{Dave}$, $SK_{Esther}/PK_{Esther}$, $SK_{Fabien}/PK_{Fabien}$. Greg dispose également d'une telle paire de clés $SK_{Greg}/PK_{Greg}$.

A l'instant où Greg initie la procédure d'ajout de membre pour être admis dans le groupe G (comme à tout instant), chacun des membres actifs du groupe dispose de la clé secrète de nœud SKj,k,p de chacun des nœuds Nj,k de sa chaîne de rattachement. De plus, pour chaque nœud Nj,k de l'arbre A, une clé publique de nœud PKj,k,p est enregistrée dans le registre.

L'ajout du nouveau membre U7, Greg, au groupe, entraîne la réalisation des opérations suivantes :

A l'étape S10 Greg transmet au *smart contract* sa demande d'admission dans le groupe, en joignant à celle-ci son authentifiant $acc_{U7}$ et sa clé publique personnelle $PK_{Greg}$. Dans ce mode de réalisation il transmet cette demande directement au *smart contract.* Dans d'autres modes de réalisation il pourrait transmettre sa demande à un administrateur du groupe et c'est celui-ci, après avoir effectué des vérifications appropriées, qui transmettrait la demande d'admission au *smart contract.*

A l'étape S20 le *smart contract enregistre* dans le registre l'admission dans le groupe G du nouveau membre U7 ayant pour authentifiant $acc_{Greg}$ et pour clé publique $PK_{Greg}$.

A l'étape S30 Greg détermine la liste des nœuds de sa chaîne de rattachement dans l'arbre, à savoir la liste N2,8 ; N3,4 ; N4,2 ; N5.

A l'étape S40, de proche en proche, Greg calcule la clé secrète de nœud puis la clé publique de nœud pour chaque nœud de sa chaîne de rattachement, depuis le nœud de l'arbre auquel il est directement rattaché jusqu'au nœud racine N5. Comme cela a été vu précédemment, dans le mode de réalisation présenté ici ce calcul est indirect : pour calculer la clé secrète d'indice p+1 d'un nœud Nj,k ayant deux fils, Greg calcule d'abord le secret de nœud NPKj,k,p+1, puis dérive de celui-ci la clé secrète de nœud SKj,k,p+1, puis la clé publique de nœud PKj,k,p+1. Si inversement un nœud de la chaîne de rattachement n'a qu'un fils (comme le nœud N2,8), dans ce cas le secret de nœud, les clés publique et secrète de nœud attribués à ce nœud sont égaux aux éléments cryptographiques correspondants du fils. On a ainsi notamment SK2,8,p+1 = $SK_{Greg}$.

A l'étape S50, Greg publie dans le registre les clés publiques des nœuds N2,8 ; N3,4 ; N4,2 et N5 calculées à l'étape S50. Toutes les clés publiques de l'arbre A sont donc ainsi mises à jour.

Cependant, pour permettre à l'ensemble des membres du groupe d'échanger des messages, leurs clés doivent alors être mises à jour.

Dans ce but, à l'étape S60 le *smart contract* envoie un message de mise à jour de clé de groupe à chaque membre avant-ajout du groupe.

A l'étape S70, à réception du message de mise à jour de clé de groupe, de proche en proche, chaque membre avant-ajout actif du groupe, c'est-à-dire chacun des membres actifs parmi les membres U1-U6 calcule la clé secrète de nœud pour chaque nœud de sa chaîne de rattachement qui fait également partie de la chaîne de rattachement de Greg, dans le sens allant du nœud de l'arbre auquel il est directement rattaché vers le nœud racine N5 (sens montant sur la Fig.3). Il effectue pour cela des calculs similaires à ceux exécutés par Greg à l'étape S40.

Chaque membre actif du groupe calcule alors la clé symétrique de communication de groupe EncKp+1, à l'étape S80.

Par suite, chaque membre actif du groupe est dès lors en mesure d'envoyer et/ou de recevoir des messages sous chiffrement symétrique à l'aide de cette clé avec les autres membres actifs du groupe.

Procédure de reconnexion des membres inactifs

Si un membre du groupe est inactif au moment où la procédure d'ajout de membre est exécutée, il ne peut réaliser l'étape S70 à ce moment-là. Par conséquent, au moment où il se reconnecte (typiquement en allumant son terminal Ti), du fait que les clés secrète et privée de groupe ont été recalculées, il ne dispose pas de ces clés et ne peut échanger de messages avec les autres membres du groupe.

Pour remédier à cette situation, il exécute la procédure de reconnexion suivante. Lorsque le membre du groupe (et donc, lorsque chaque membre du groupe) se reconnecte, il consulte ses messages. S'il a reçu un message d'ajout de membre, il exécute alors les étapes S70 et S80, ce qui lui permet d'obtenir les clés secrètes à jour pour l'ensemble des nœuds de sa chaîne de rattachement, ainsi que la clé symétrique de groupe EncKp+1, qui lui permet alors d'échanger des messages avec les autres membres du groupe.

Retrait d'un membre

Lorsqu'un membre du groupe (dit 'membre partant') quitte le groupe G (à un indice de mise à jour p), une procédure de retrait de membre est exécutée pour assurer qu'après le départ du membre, celui-ci ne dispose plus de la clé symétrique secrète EncKp utilisée pour le chiffrement des messages dans le groupe et par suite, ne peut plus avoir accès aux messages échangés par le groupe. Plus généralement la procédure de retrait vise à renouveler la clé secrète de groupe $SK_{group\ p}$, pour que le membre partant ne puisse plus avoir accès à des informations confidentielles relatives au groupe.

Pour renouveler cette clé secrète, il va être nécessaire de recalculer la clé de secrète de nœud pour chacun des nœuds de la chaîne de rattachement du membre partant.

Pour ce faire, la procédure de retrait comprend la réalisation des opérations suivantes lorsque le retrait du membre partant est décidé :

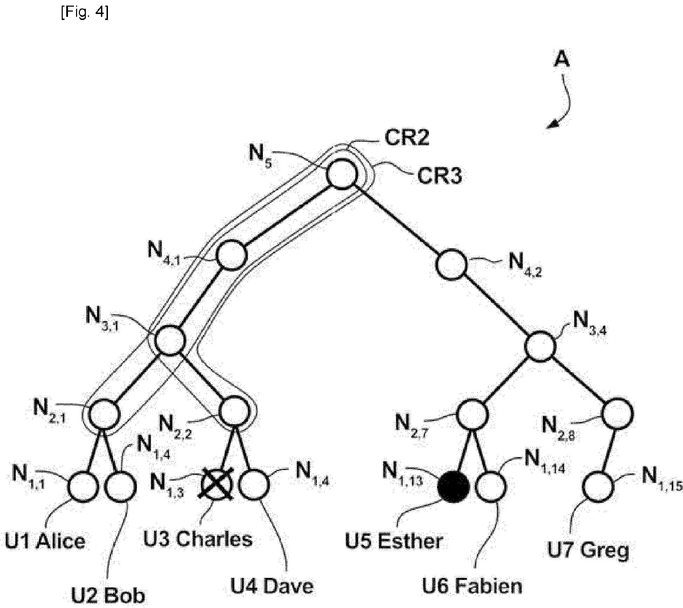

On prend comme exemple le cas où Charles (membre U3 du groupe), quitte le groupe G dont l'arbre A est représenté sur la Fig.4. La chaîne de rattachement CR3 de Charles comporte les nœuds N2,2 ; N3,1 ; N4,1 ; N5.

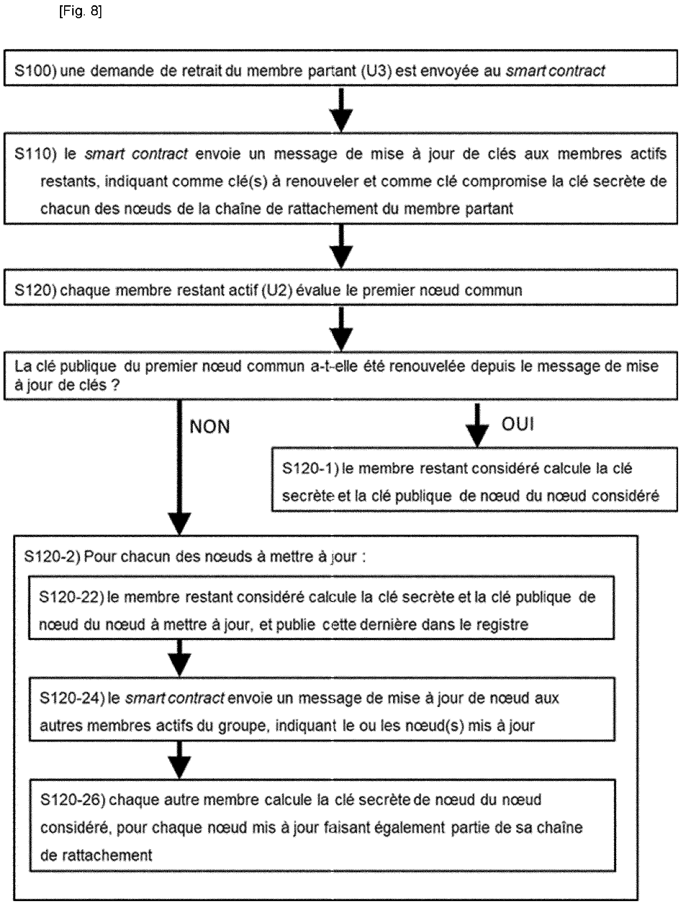

Les étapes de la procédure de retrait de membre sont représentées sur la Fig.8. La Fig.4 représente l'arbre A au moment de l'exécution de la procédure de retrait suite au départ de Charles.

A l'étape S100, Charles, directement ou éventuellement par l'intermédiaire d'Alice l'administratrice du groupe, envoie au *smart contract* une demande de retrait.

A l'étape S110, le *smart contract* envoie un message de mise à jour de clés à chaque membre restant du groupe, indiquant comme clé(s) à renouveler et comme clé compromise la clé secrète de chacun des nœuds de la chaîne de rattachement du membre partant Charles (U3). Dès la réception de ce message, chaque membre du groupe considère la clé publique de chacun des nœuds de la chaîne de rattachement CR3 de Charles comme compromise.

A l'étape S120, chaque membre restant actif évalue le nœud, dit premier nœud commun, qui est le nœud de sa chaîne de rattachement qui est le plus éloigné du nœud racine et qui appartient aussi à la chaîne de clés à renouveler.

On suppose que le premier membre restant considéré qui effectue cette procédure est Bob (U2). La chaîne de rattachement CR2 de Bob comporte les nœuds N2,1 ; N3,1 ; N4,1 ; N5.

Le premier nœud commun est donc le nœud N3,1.

A cet instant, la clé publique du premier nœud commun, N3,1, n'a pas été recalculée depuis le message de mise à jour de clés : elle est donc une clé compromise. Bob en déduit qu'il doit exécuter l'étape S120-2, composée des étapes S120-22, S120-24 et S120-26 : Il doit recalculer les clés publiques du nœud N3, 1 ainsi que de tous les nœuds supérieurs dans sa chaîne de rattachement CR2 (c'est-à-dire les nœuds N4,1 et N5).

Ainsi à l'étape S120-2, pour chacun des nœuds (dits 'nœuds mis à jour) N3,1 ; N4,1 et N5, Bob (le membre restant considéré) calcule le secret partagé de nœud, et en déduit la clé publique et la clé secrète du nœud, et publie la clé publique dans le registre. Lors du calcul pour le nœud N3,1, comme la clé N2,2 est compromise, le nœud N2,2 est considéré comme inexistant lors du calcul du secret partagé de nœud NPK3,1,p+1. En d'autres termes, le nœud N3,1 est considéré pour ce calcul comme un nœud ayant un seul fils (le nœud N2,1). La clé secrète du nœud N3,1 est donc calculée en fonction seulement de la clé secrète que détient Bob du nœud N2,1. Aucune information provenant de la clé publique compromise du nœud N2,2 n'est donc utilisée.

Les clés secrètes des nœuds N4,1 et N5 sont ensuite calculées. On a donc :

$$SK4,1,p+1 = SK3,1,p+1 = SK2,1,p+1$$

La clé de nœud NPK5 est calculée en fonction de SK4,1 et PK4,2 (la branche droite de l'arbre ne comportant pas de clé compromise).

Les clés publiques PK3,1,p+1, PK4,1,p+1 et P5,p+1 sont publiées dans le registre.

Comme des clés publiques PK3,1 ; PK4,1 et PK5 ont été recalculées, à l'étape S120-24 le *smart contract* envoie alors un message de mise à jour de clés à chaque autre membre du groupe (autre que le membre partant (Charles)) et autre que le membre restant considéré (Bob)), indiquant comme clés à renouveler la clé au moins de chacun des nœuds mis à jour faisant aussi partie de la chaîne de rattachement dudit autre membre considéré. Ce message est donc envoyé à Alice, Dave, Fabien et Greg (Esther étant absente), qui sont donc les 'autres membres'. Par exemple, pour Fabien et Greg, le message peut simplement indiquer que la clé publique PK5 a été recalculée.

A réception du message émis à l'étape S120-26, chaque autre membre actif calcule la clé secrète de nœud pour chaque nœud de sa chaîne de rattachement qui est également un nœud mis à jour, dans le sens allant du nœud de l'arbre auquel il est directement rattaché vers le nœud racine.

On suppose que Dave est le deuxième membre du groupe qui réagit à la réception du message de mise à jour de clés envoyé à l'étape S110.

Dave réagit aux messages émis aux étapes S110 et S120-26 en effectuant les étapes suivantes :
Pour Dave, le premier nœud commun (c'est-à-dire le nœud le plus bas de sa chaîne de rattachement dont une clé est indiquée dans le message émis à l'étape S110 comme clé à renouveler et comme clé compromise) est le nœud N2,2.

A l'étape S120, Dave (en tant que membre restant considéré), évalue ce premier nœud commun N2,2.

La clé publique du nœud N2,2 n'a pas été renouvelée depuis le message émis à l'étape S110.

Dave doit donc exécuter l'étape S120-2.

Les nœuds dits 'nœuds mis à jour' sont les nœuds N2,2 ; N3,1 ; N4,1 ; N5.

Le nœud N1,3 ayant été supprimé (du fait du départ de Charles), les clés publique et secrète du nœud $NPK2,2,p+1$ sont égales respectivement à la clé publique et la clé secrète de Dave $PK_{Dave}$ et $SK_{Dave}$.

A l'étape S120-22, Dave calcule donc de proche en proche, les secrets partagés de nœud et les clés secrète et publique de nœud successivement pour les nœuds N3,1 ; N4,1 ; N5.

A l'étape S120-24, le *smart contract* envoie un message de mise à jour de clés au moins à chaque autre membre actif du groupe, indiquant comme clés à renouveler la clé secrète de chacun desdits nœuds mis à jour, donc les clés des nœuds N2,2 ; N3,1 ; N4,1 ; N5.

A l'étape S120-26, chacun des autres membres s'il y a lieu met à jour ses clés le long de sa chaîne de rattachement.

Ainsi en particulier, Bob doit à nouveau recalculer les clés secrètes et publiques pour les nœuds de sa chaîne de rattachement dont les clés secrètes et publiques ont été recalculées : il recalcule donc les clés pour les nœuds N3,1 ; N4,1 et N5.

Les autres membres actifs du groupe, Alice, Fabien et Greg recalculent alors également les clés secrètes et publiques pour les nœuds de leurs chaînes de rattachement respectives dont les clés secrètes et publiques ont été recalculées.

Dans le cas de Fabien ou de Greg, ce calcul consiste simplement à recalculer le secret partagé de nœud, puis les clés secrète et publique, pour le nœud N5.

Alice quant à elle a reçu le message émis à l'étape S110, indiquant comme clés à renouveler et comme clé compromise la clé secrète de chacun des nœuds N2,2 ; N3,1 ; N4,1 ; N5.

Elle a reçu lors des étapes S120-24 initiées par Bob et Dave des messages de mise à jour de nœuds indiquant comme nœuds mis à jour respectivement les nœuds N3,1 ; N4,1 et N5, puis les noeuds N2,2 ; N3,1 ; N4,1 et N5.

Pour Alice, le premier nœud commun (entre sa chaîne de rattachement et celle du membre partant Bob) est le nœud N3,1. Alice détermine que la clé publique de ce nœud a été recalculée depuis le message émis à l'étape S110. Alice exécute donc l'étape S120-1.

A l'étape S120-1, pour chaque nœud de sa chaîne de rattachement, à partir du premier nœud commun N3,1 et jusqu'au nœud racine N5, Alice (en tant que membre restant considéré) calcule le secret partagé du nœud considéré, et en déduit la clé publique et la clé secrète de nœud du nœud considéré. Elle recalcule ainsi les éléments cryptographiques pour les nœuds N3,1 ; N4,1 ; N5. Grâce à la clé secrète du nœud N5 elle calcule la valeur à jour de la clé symétrique de communication de groupe $EncK_{group}$.

Ces opérations mettent Alice en mesure d'échanger des messages avec le reste du groupe.

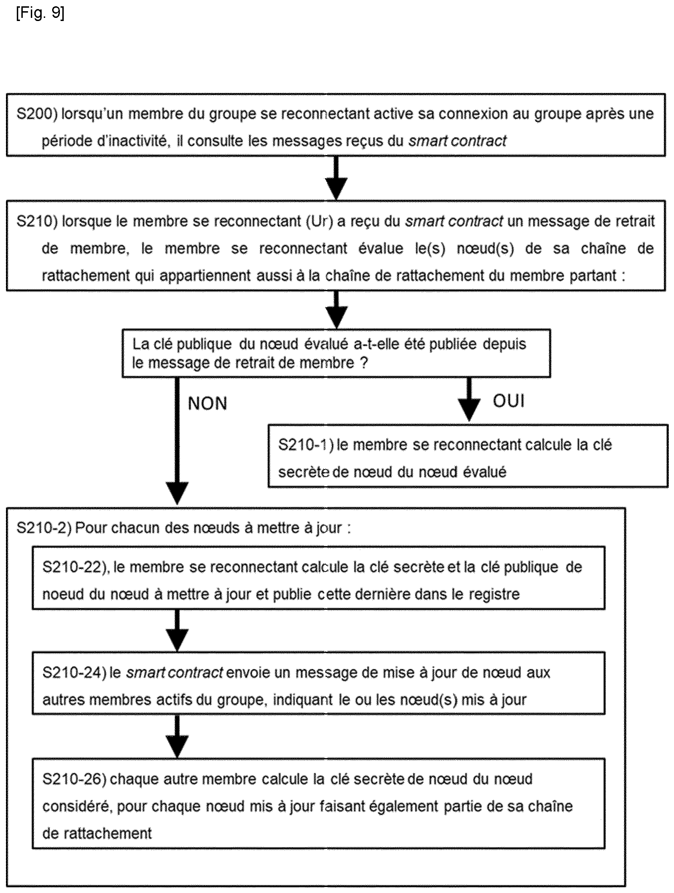

La procédure de reconnexion d'un membre qui était inactif au moment du retrait du membre partant (Charles) est illustrée par la Fig.9, dans le cas de la reconnexion d'Esther.

Ultérieurement, Esther active son terminal afin de se reconnecter au groupe.

Esther reçoit alors les messages émis à l'étape S110 et aux différentes étapes S120-24. Dans le contexte du départ du membre U3, Charles, le premier nœud commun est le nœud N5.

A l'étape S200, lorsqu'Esther (en tant que 'membre se reconnectant') active sa connexion au groupe, elle consulte les messages reçus du *smart contract.*

A l'étape S210, puisqu'elle a reçu du *smart contract* le message de retrait de Charles, de proche en proche, Esther évalue les nœud(s) de sa chaîne de rattachement qui appartiennent aussi à la chaîne de rattachement du membre partant, c'est-à-dire en l'occurrence le nœud N5.

A l'étape S210, Esther évalue l'état de ce premier nœud commun N5 : elle détermine que la clé publique de ce nœud a été renouvelée depuis le message émis à l'étape S110.

Esther exécute alors l'étape S210-1 : elle calcule le secret partagé de groupe pour le nœud N5, et en déduit la clé secrète puis la clé publique pour le nœud N5. Elle en déduit enfin la clé symétrique de communication du groupe $EncCK_{group}$.

Dans le cas inversement où pour un ou plusieurs nœuds évalués, Esther constaterait que la clé publique de ce nœud n'a pas été renouvelée depuis le message émis à l'étape S110, Esther réaliserait les étapes S210-22, S210-24 et S210-26 indiquées précédemment, qui sont analogues aux étapes de l'étape S120-2.

Selon une variante, si la procédure de retrait d'un membre est exécutée pendant une période pendant laquelle un des membres du groupe est inactif, la procédure de reconnexion suivante est suivie lors de la reconnexion de ce membre :

La procédure d'ajout de membre au groupe est réalisée pour le membre en question comme s'il rejoignait le groupe pour la première fois. Des dispositions adéquates sont cependant prises de préférence pour que le membre en question conserve l'historique de ses interactions avec le groupe.

Accès aux messages échangés pendant une période d'inactivité

Lorsqu'un membre est inactif lors de l'ajout d'un nouveau membre au groupe ou du retrait d'un membre du groupe, du fait du renouvellement de la clé secrète de groupe, le membre inactif ne peut avoir accès aux messages qui sont échangés au sein du groupe à partir du changement de clé secrète de groupe faisant suite au départ ou à l'ajout d'un membre.

Lorsque le membre se reconnecte, comme cela a été expliqué précédemment il calcule la nouvelle clé secrète du groupe et donc à la clé de communication de groupe qui en est dérivée : cela lui donne dès lors accès aux nouveaux messages échangés au sein du groupe.

Cependant, cela ne lui donne pas accès aux messages qui ont été échangés entre l'ajout ou le retrait du membre du groupe et le moment de sa reconnexion au groupe.

Pour permettre à ce membre, dit membre en reconnexion, d'avoir accès à ces messages, la procédure suivante, dite procédure d'accès, peut être exécutée.

On prend comme exemple le cas de la reconnexion du membre U5, Esther, qui était déconnectée au moment où la procédure de retrait du membre U3, Charles, a été exécutée.

Comme cela a été indiqué, à l'étape S120 chacun des membres restants actifs du groupe a effectué sa procédure de mise à jour.

Ultérieurement, au moment de sa reconnexion, le membre U5, Esther, a réalisé la procédure de reconnexion décrite ci-dessus pour obtenir la nouvelle clé secrète du nœud racine et la nouvelle clé de communication de groupe.

En complément, la procédure d'accès décrite ci-dessous va permettre à Esther d'avoir accès aux messages échangés de la procédure de retrait du membre jusqu'à ce qu'elle ait exécuté la procédure de reconnexion.

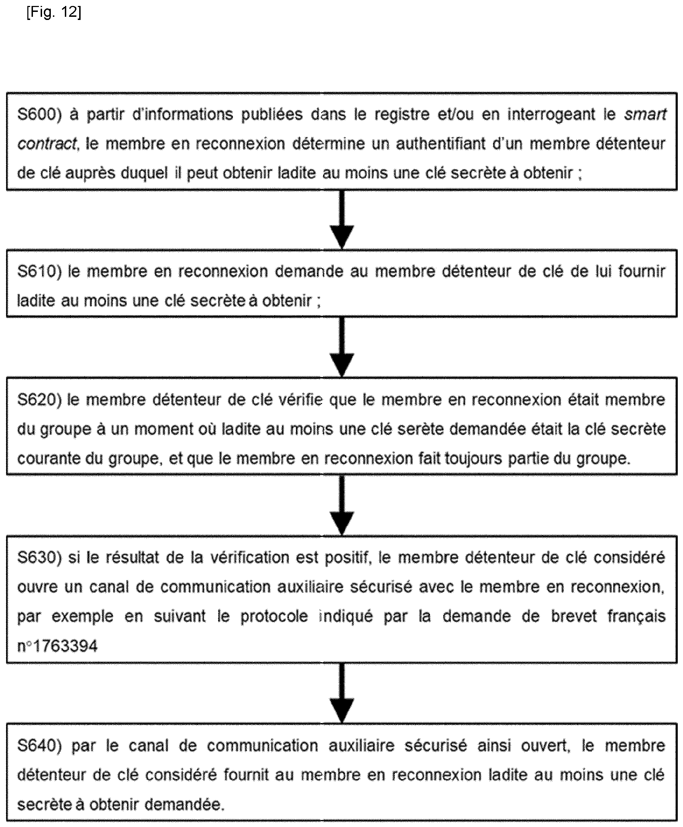

Cette procédure d'accès comporte les étapes suivantes, illustrées par la Fig.12 :

A l'étape S600, à partir des informations publiées dans le registre concernant des ajouts ou retraits de membres et/ou des publications de clés publiques, et/ou en interrogeant le *smart contract,* Esther (en tant que 'membre en reconnexion') détermine le(s) authentifiant(s) d'un ou de membre(s) ('membres détenteurs de clés') auprès duquel ou desquels elle peut obtenir la ou les clé(s) secrète(s) temporaire(s) qui a/ont été utilisée(s) pendant sa période d'inactivité après le retrait du membre partant.

Elle se procure alors la ou les clés secrètes de groupe qui lui manquent en contactant le(s) membre(s) détenteur(s) de clé identifié(s) via un canal de communication sécurisé.

Lorsqu'elle contacte un membre détenteur de clé, elle procède de la manière suivante :

A l'étape S610, elle (en tant que membre en reconnexion) demande au membre détenteur de clé de lui fournir une ou plusieurs clés secrètes dont il dispose et que le membre en reconnexion souhaiterait obtenir.
A l'étape S620, pour répondre à cette demande, le membre détenteur de clé vérifie la légitimité de la demande du membre en reconnexion.

A partir des informations publiées dans le registre concernant des ajouts ou retraits de membres et/ou des publications de clés publiques, et/ou en interrogeant le *smart contract,* il vérifie notamment :

- que le membre en reconnexion était habilité à avoir accès à la ou les clé(s) secrète(s) demandée(s), du fait qu'il était bien membre du groupe à un moment où cette/ces clé(s) secrète(s) demandée(s) étai(en)t la/les clé(s) secrète(s) courante(s) du groupe ; et
- que le membre en reconnexion fait toujours partie du groupe.

A l'étape S630, si le membre détenteur de clé considéré a conclu à l'issue de l'étape S620 que la demande du membre en reconnexion est légitime, il ouvre un canal de communication auxiliaire sécurisé avec le membre en reconnexion. Tout procédé de sécurisation approprié peut être choisi pour ce canal de communication. Ce canal de communication sécurisé peut être ouvert par exemple en effectuant un échange de clés suivant le protocole de Diffie-Hellmann, en suivant le protocole indiqué par la demande de brevet français n°1763394.

A l'étape S640, par le canal de communication auxiliaire sécurisé ainsi ouvert, le membre détenteur de clés considéré fournit alors au membre en reconnexion la ou les clés secrètes demandées.

Celui-ci, à réception de celle(s)-ci, est alors à même de prendre connaissance des messages échangés pendant la période pendant laquelle cette ou clés étaient la/les clés courantes du groupe.

## DEUXIEME ASPECT

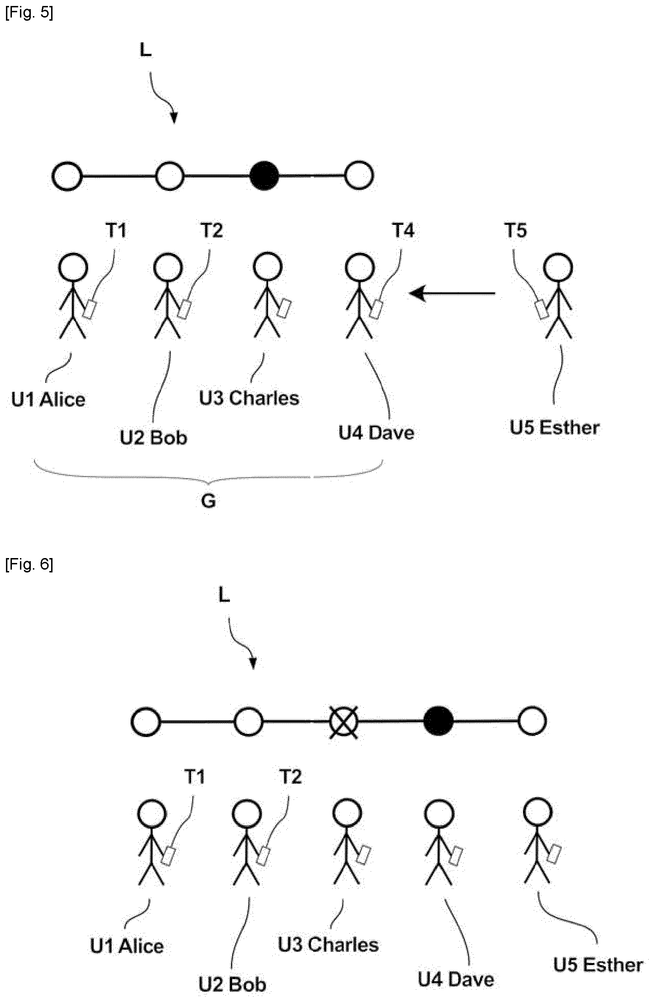

A titre d'exemple, un mode de mise en œuvre de procédés suivant le deuxième aspect de la présente divulgation va maintenant être présenté en relation notamment avec les Figs. 5 et 6.

Dans ce mode de mise en œuvre, les membres Ui du groupe sont gérés non pas à l'aide d'un arbre binaire, mais à l'aide d'une liste chaînée, c'est-à-dire une suite d'éléments consécutifs.

Les caractéristiques générales du procédé décrites précédemment peuvent également être mises en œuvre dans le cas de la gestion du groupe par une liste chaînée.

Comme précédemment, la clé secrète de groupe que le procédé de gestion permet à tous les membres du groupe de détenir de manière partagée est utilisée par chacun pour calculer une clé symétrique de communication pour le groupe, EncKp (à l'indice p du groupe), qui est calculée à partir de la clé secrète de groupe $SK_{group\ p}$.

La clé EncKp est utilisée par chacun des membres du groupe pour chiffrer et déchiffrer des messages échangés avec les autres membres du groupe.

Dans ce mode de réalisation, une liste chaînée L est utilisée pour la gestion du groupe.

Sur la Fig.5 est représentée à titre d'exemple une liste L qui représente de manière schématique un groupe G. Comme on le voit sur cette figure, à l'instant considéré le groupe G comporte 4 membres : U1, Alice ; U2, Bob ; U3, Charles et U4, Dave.

La liste L varie au cours du temps en fonction des admissions et des départs de membres, chaque admission ou départ entraînant au moins une mise à jour du groupe. Chaque mise à jour du groupe comporte une mise à jour de la liste L et des variables cryptographiques associées.

Dans la liste L, une paire de clés asymétrique de groupe comportant une clé secrète $SK_{group\ p}$ et une clé publique $PK_{group\ p}$ est générée et associée au groupe G lors de la $p^{ième}$ mise à jour ; p est appelé l'indice courant (c'est-à-dire, à l'instant considéré) de cette paire de clés asymétrique de groupe.

La clé publique de groupe $PK_{group\ p}$ peut être calculée à partir de la clé secrète $SK_{group\ p}$ à l'aide du crypto-système choisi pour le groupe, de manière connue en soi.

Chaque clé publique de groupe $PK_{group\ p}$ est enregistrée dans le registre et donc est librement accessible (du moins pour les membres ayant accès au registre).

Dans l'exemple de mise en œuvre présenté ici, le crypto-système choisi pour le groupe est un crypto-système de courbe elliptique, utilisant les paramètres (p, a, b, G, n et h).

C'est donc un cryptosystème de même type que celui présenté dans le premier mode de mise en œuvre. Par conséquent, sauf indication contraire les opérations de calcul de clés sont réalisées pour le deuxième mode de mise en œuvre comme pour le premier mode de mise en œuvre.

Notamment, dans ce mode de mise en œuvre le calcul de nouvelles clés secrète et publique de groupe se fait de manière indirecte :

Dans un premier temps, un nouveau secret partagé de groupe (d'indice p+1) $NPK_{group\ p+1}$ est calculé par une fonction de chiffrement combinant :

- la clé publique d'un nouveau membre du groupe et la clé secrète de groupe d'indice précédent (p) ; ou
- la clé secrète du nouveau membre du groupe et la clé publique de groupe d'indice précédent (p).

La fonction de chiffrement Enc du crypto-système asymétrique (Enc,Dec) doit vérifier la même propriété que celle définie dans le premier mode de mise en œuvre.

La nouvelle clé secrète de groupe $SK_{group\ p+1}$ est dérivée du secret partagé de groupe $NPK_{group\ p+1}$ par toute fonction de dérivation adaptée.

La nouvelle clé secrète de groupe $SK_{group\ p+1}$ peut ainsi être déduite du secret partagé de groupe comme étant égale à la composante sur x de $NPK_{group\ p+1}$ :

$$SK_{group\ p+1} = NPK_{group\ p+1}(x)$$

De plus, la nouvelle clé publique de groupe $PK_{group\ p+1}$ est obtenue à partir de la clé secrète $SK_{group\ p+1}$ par la formule : $PK_{group\ p+1} = SK_{group\ p+1} \cdot G$.

La fonction de dérivation doit naturellement être détenue par toute personne qui a à calculer une nouvelle valeur de la clé secrète de groupe.

La clé symétrique de groupe servant à permettre l'échange de messages entre membres du groupe est alors calculée comme étant égale à la deuxième composante (la composante en y) du secret partagé de groupe. Elle est donc fournie par l'équation : $encK_{group\ p+1} = NPK_{group\ p+1}(y)$.

Ajout de membre

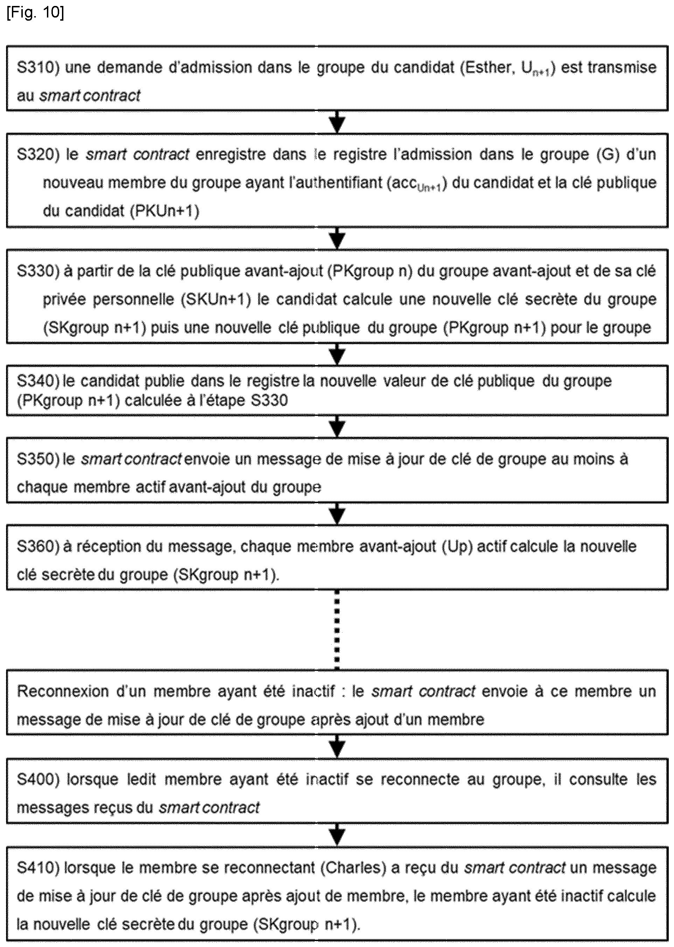

Les modalités d'admission de nouveaux membres dans le groupe G suivant le procédé de gestion vont maintenant être présentées à titre d'exemple au moment représenté sur la Fig.5, où une candidate, Esther, rejoint le groupe G. Les étapes de la procédure sont illustrées par la Fig.10.

Dans cette situation initiale, dite 'avant-ajout', chacun des membres du groupe (Alice, Bob, Charles, Dave) détient la clé secrète de groupe $SK_{group\ 4}$ (on suppose qu'il n'y a pas eu de retrait de membre depuis la création du groupe, donc l'indice du groupe est p=4).

La clé publique avant-ajout ($PK_{group\ 4}$) du groupe avant-ajout est enregistrée dans le registre.

La procédure d'ajout pour ajouter Esther dans le groupe comprend les opérations suivantes : Préalablement, Esther s'est dotée d'une paire de clés asymétrique comprenant une clé secrète personnelle ($SK_{Esther}$) à partir de laquelle sa clé publique personnelle ($PK_{Esther}$) a été calculée à l'aide du crypto-système du groupe.

Par ailleurs, à l'instant où la procédure d'ajout de membre est exécutée, Alice, Bob et Dave sont actifs mais inversement, Charles est inactif.

A l'étape S310, Esther soumet sa demande d'admission à l'administratrice du groupe, Alice.

Alice vérifie qu'Esther remplit les conditions d'admission dans le groupe. En l'occurrence, elle conclut que ces conditions sont remplies et transmet la demande d'admission au *smart contract,* en joignant l'authentifiant ($acc_{Esther}$) et la clé publique personnelle ($PK_{Esther}$) d'Esther.

A l'étape S320, le *smart contract* enregistre Esther dans le registre comme nouveau membre du groupe, en enregistrant notamment son authentifiant $acc_{Esther}$ et sa clé publique $PK_{Esther}$.

A l'étape S330 à partir de la clé publique avant-ajout ($PK_{group\ 4}$) du groupe avant-ajout et de sa clé privée personnelle ($SK_{Esther}$) la candidate, Esther, calcule une nouvelle valeur de clé secrète du groupe ($SK_{group\ 5}$) puis une nouvelle valeur de clé publique du groupe ($PK_{group\ 5}$) pour le groupe G.

A l'étape S340, Esther publie dans le registre la nouvelle valeur de clé publique du groupe ($PK_{group\ 5}$) calculée à l'étape S330.

A l'étape S350, le *smart contract* envoie un message de mise à jour de clé de groupe, dans ce mode de réalisation, à tous les membres actifs avant-ajout du groupe, à savoir Alice, Bob et Dave.

A l'étape S360, à réception de ce message, à partir de la clé secrète avant-ajout ($SK_{group\ 4}$) du groupe avant-ajout et de la clé publique personnelle $PK_{Esther}$ d'Esther, chacun d'eux calcule la nouvelle valeur de clé secrète du groupe $SK_{group\ 5}$ en appliquant la formule donnée ci-dessus, et ainsi : $SK_{group\ 5} = SK_{group\ 4} \cdot PK_{Esther}$.

A l'étape S370, chacun d'eux calcule alors de plus la clé symétrique de communication du groupe EncK5, ce qui lui permet de continuer à échanger des messages avec le groupe, comprenant maintenant Esther.

Ainsi par construction, la liste des membres du groupe est la liste ordonnée dans l'ordre chronologique de leurs dates d'admission ou plutôt de leurs dates de dernière admission dans le groupe.

Dans certains modes de mise en œuvre, les positions dans le groupe des membres du groupe sont indexées par un index et sont suivies par le *smart contract.*

Procédure de reconnexion des membres inactifs suite à l'ajout d'un membre

Un peu plus tard, Charles (comme exemple de membre ayant été inactif) se reconnecte au groupe.

Le *smart contract* détecte cette reconnexion (ou bien Charles envoie au *smart contract* un message signalant sa reconnexion) et envoie à Charles un message de mise à jour de clé de groupe.

(Selon une variante, à l'étape S350 le message de mise à jour de clé de groupe est envoyé à la totalité des membres avant-ajout du groupe, qu'ils soient actifs ou pas).

Charles exécute la procédure de reconnexion en effectuant les opérations suivantes :

A l'étape S400, Charles consulte les messages reçus du *smart contract.* Il constate donc que le *smart contract* lui a envoyé un message de mise à jour de clé de groupe.

A l'étape S410, en raison de ce message, à partir de la clé secrète avant-ajout ($SK_{group\ 4}$) du groupe avant-ajout, qu'il détient, et de la clé publique personnelle ($PK_{Esther}$) d'Esther, Charles à son tour calcule la nouvelle valeur de clé secrète du groupe ($SK_{group\ 5}$).

Il calcule alors la clé symétrique de communication du groupe EncK5, ce qui lui permet à nouveau d'échanger des messages avec le groupe.

### Retrait d'un membre

Lorsqu'un membre du groupe (dit 'membre partant') quitte le groupe G (à un indice de mise à jour p), une procédure de retrait de membre est exécutée pour assurer qu'après le départ du membre, celui-ci ne dispose plus de la clé symétrique secrète $EncK_{group\ p}$ utilisée pour le chiffrement des messages dans le groupe et par suite, ne peut plus avoir accès aux messages échangés par le groupe. Plus généralement la procédure de retrait vise à renouveler la clé secrète de groupe $SK_{group\ p}$, pour que le membre partant ne puisse plus avoir accès à des informations confidentielles relatives au groupe.

La procédure de retrait suivante est donc exécutée lorsque le retrait d'un membre partant est décidé :

On prend comme exemple le cas où Charles (membre U3 du groupe), quitte le groupe G dont l'arbre A est représenté sur la Fig.6.

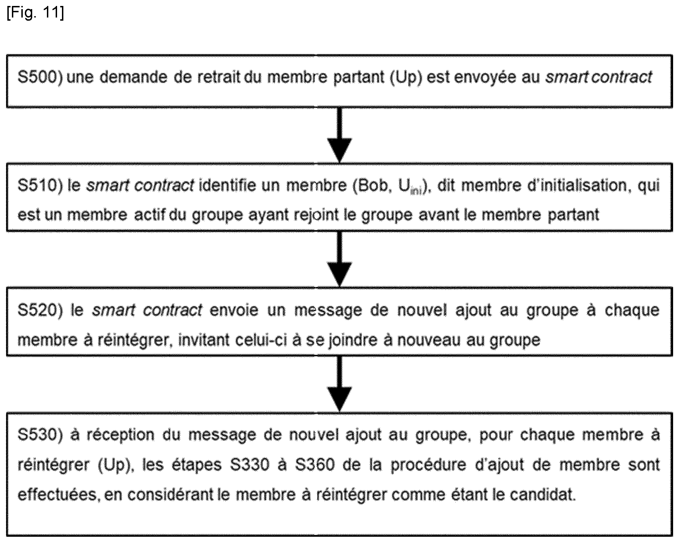

La Fig.6 représente l'arbre A au moment de l'exécution de la procédure de retrait suite au départ de Charles. Les étapes de la procédure sont illustrées par la Fig.11.

A l'étape S500, Charles, ou éventuellement Alice l'administratrice du groupe, envoie au *smart contract* une demande de retrait du membre partant, Charles.

A l'étape S510, le *smart contract* identifie un membre Uini, dit membre d'initialisation, qui est un membre actif du groupe ayant rejoint le groupe avant le membre partant, Charles. Dans l'exemple présenté ici, Bob est identifié comme membre d'initialisation Uini.

A l'étape S520, le *smart contract* envoie un message de nouvel ajout au groupe à chaque membre du groupe ayant rejoint le groupe après le membre d'initialisation (Bob), sauf à Charles naturellement, invitant celui-ci à se joindre à nouveau au groupe.

Chacun des membres à qui ces messages sont envoyés est appelé 'membre à réintégrer' ; les principales étapes de la procédure d'ajout de membre vont devoir être exécutées pour le membre à réintégrer pour permettre la mise à jour de la clé secrète du groupe.

Par conséquent à l'étape S530, pour chaque membre à réintégrer (Up), les étapes S330 à S360 de la procédure d'ajout de membre sont effectuées, en considérant le membre à réintégrer comme étant le candidat.

Une fois que ces étapes ont été effectuées, chaque membre à réintégrer calcule alors à partir de la nouvelle clé secrète de groupe la clé symétrique de communication du groupe, $EncK_{group\ p+1}$.

En recalculant ainsi la clé secrète du groupe successivement, à partir du membre d'initialisation, pour chacun des membres à réintégrer, une nouvelle valeur de clé secrète pour le groupe est progressivement calculée. Cette valeur est partagée entre tous les membres actifs du groupe, mais n'est pas connue du membre qui s'est retiré.

### Procédure de reconnexion des membres inactifs suite au retrait d'un membre

Comme on peut le voir sur la Fig.6, au moment de la procédure de retrait, Dave est inactif.

Un peu plus tard, Dave (comme exemple de membre ayant été inactif) se reconnecte au groupe.

Le *smart contract* détecte cette reconnexion (ou bien Dave envoie au *smart contract* un message signalant sa reconnexion) et envoie à Dave un message de nouvel ajout au groupe (Selon une variante, à l'étape S420 le message de nouvel ajout au groupe peut être envoyé à la totalité des membres du groupe (hormis au membre qui se retire)).

Dave exécute la procédure de reconnexion en effectuant les opérations suivantes :

, Dave consulte les messages reçus du *smart contract.* Il constate donc que le *smart contract* lui a envoyé un message de nouvel ajout au groupe.

Par conséquent à l'étape suivante, les étapes S330 à S360 de la procédure d'ajout de membre sont effectuées, en considérant Charles (en tant que membre à réintégrer) comme étant le candidat.

Une fois que ces étapes ont été effectuées, Charles calcule alors à partir de la nouvelle clé secrète de groupe la clé symétrique de communication du groupe, $EncK_{group\ p+1}$.

Par ailleurs, si Dave souhaite avoir accès à des messages qui ont été échangés au sein du groupe pendant sa période d'inactivité, il peut exécuter la procédure d'obtention de clés secrète décrite précédemment pour le premier mode de mise en œuvre. Cela lui permet alors d'obtenir les clés secrètes de groupe qui étaient les clés secrètes courantes du groupe pendant sa période d'inactivité. A partir de ces clés secrètes, il peut calculer les clés de communication du groupe pendant cette même période, et ainsi il peut déchiffrer les messages chiffrés échangés pendant cette période.

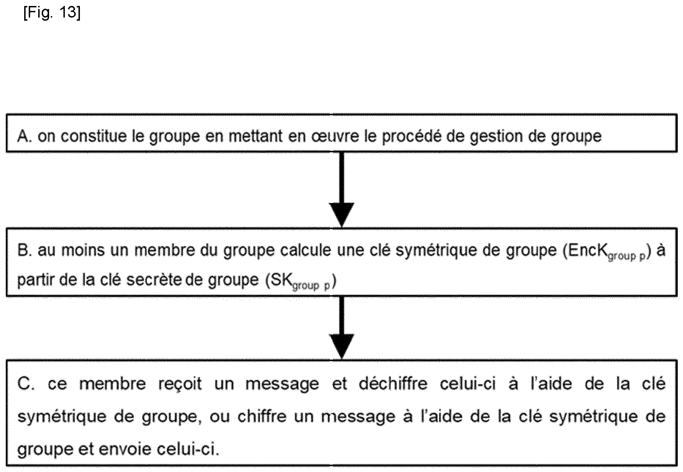

Un exemple de mise en œuvre des procédés de gestion de groupe selon la présente divulgation est illustré par la Fig.13.

Cette figure présente un procédé de communication chiffrée au sein d'un groupe, comprenant les étapes suivantes :

A. on constitue le groupe en mettant en œuvre l'un des procédés de gestion de groupe présentés précédemment.

B. Au moins un membre du groupe calcule une clé symétrique de groupe à partir de la clé secrète de groupe.

C. Ensuite, ce membre reçoit un message et déchiffre celui-ci à l'aide de la clé symétrique de groupe, ou chiffre un message à l'aide de la clé symétrique de groupe et envoie celui-ci.

## Revendications

1.   Procédé de gestion d'un groupe comprenant une pluralité de membres ($U_1$... $U_n$), chaque membre (Ui) détenant ou étant en mesure de détenir une clé secrète (SKj,k,p) de groupe,

le procédé faisant appel à un crypto-système asymétrique (Enc,Dec) vérifiant la propriété, pour deux paires de clés asymétriques (PK1,SK1) et (PK2,SK2) :

$$Enc(PK1,SK2) = Enc(SK1,PK2),$$

où Enc est la fonction de chiffrement du crypto-système, et à un registre (B) dans lequel un *smart contract* (SC) est déployé ;

un arbre binaire (A) étant utilisé pour ordonner les membres du groupe ;

chaque membre (Ui) étant associé à un nœud terminal de l'arbre, ce nœud étant rattaché à un nœud racine de l'arbre, directement ou via une suite d'au moins un nœud (Nj,k), le nœud racine et lorsqu'elle existe ladite suite d'au moins un nœud constituant la chaîne de rattachement du membre (Ui) considéré ;

chaque membre du groupe disposant d'une paire de clés asymétrique, dont la clé secrète et la clé publique sont considérées comme la clé secrète de nœud et la clé publique de nœud pour le nœud terminal associé au membre ;

la clé publique du nœud racine étant appelée clé publique du groupe ;

le procédé comprenant une procédure d'ajout de membre pour intégrer au groupe un candidat souhaitant rejoindre le groupe, à un instant donné où

le groupe (G) est constitué par un ensemble de membres (Up), dits membres avant-ajout, formant un arbre avant-ajout (An),

chaque membre avant-ajout (Uav) dispose de ou est en mesure de calculer une clé secrète avant-ajout de nœud (SKj,k,n) pour tout nœud (Nj,k,n) de sa chaîne de rattachement ; et

pour chaque nœud de l'arbre avant-ajout (An), une clé publique avant-ajout (PKj,k,n) de nœud est enregistrée dans le registre ;

la procédure d'ajout de membre comprenant les opérations suivantes :

S10) une demande d'admission dans le groupe du candidat ($U_{n+1}$) est transmise au *smart contract,* la demande d'admission comprenant un authentifiant ($acc_{User}$) et une clé publique personnelle (PKUn+1) du candidat, le candidat détenant en outre une clé privée personnelle (SKUn+1) à partir de laquelle sa clé publique personnelle (PKUn+1) a été calculée au moyen du crypto-système ;

S20) le *smart contract* enregistre dans le registre l'admission dans le groupe (G) d'un nouveau membre ayant l'authentifiant ($acc_{Un+1}$) du candidat et la clé publique du candidat (PKUn+1) ;

S30) le candidat détermine ou obtient du *smart contract* une liste du ou des nœuds de sa chaîne de rattachement dans l'arbre ;

S40) de proche en proche, pour chaque nœud de sa chaîne de rattachement, depuis le nœud de l'arbre auquel il est directement rattaché jusqu'au nœud racine (N1), le candidat calcule la clé secrète de nœud (SKj+1,k1,n+1) puis la clé publique de nœud (PKj+1,k1,n+1) ;

S50) le candidat publie dans le registre la ou les clé(s) publique(s) de nœud (PKj,k,n) calculée(s) à l'étape S40 ;

S60) le *smart contract* envoie un message d'ajout de membre au moins à chaque membre actif avant-ajout du groupe ; et

S70) à réception du message d'ajout de membre, de proche en proche, pour chaque nœud de sa chaîne de rattachement qui fait également partie de la chaîne de rattachement du candidat, dans le sens allant du nœud de l'arbre auquel il est directement rattaché vers le nœud racine (Ns), chaque membre actif avant-ajout (Up) calcule la clé secrète de nœud (SKj+1,k1,n+1) ;

la clé secrète de nœud (NPKj,k,p+1) d'un nœud donné (Nj,k) étant calculée par une personne dont la chaîne de rattachement contient un premier fils du nœud donné:

- si ledit nœud donné a un deuxième fils et que ladite personne a accès à une clé publique non compromise du deuxième fils, en fonction de la clé secrète (SKj,k2-1,n) du premier fils actif et de la clé publique (PKj,k2,n) dudit deuxième fils dudit nœud donné ; ou dans tout autre cas,
- en fonction de la clé secrète (SKj-1,k1,p) du premier fils dudit nœud donné.

2. Procédé de gestion d'un groupe selon la revendication 1, le procédé comprenant en outre une procédure de retrait_d'un membre du groupe, dit membre partant (Up), autre que le membre ayant rejoint le groupe en dernier, pour retirer du groupe le membre partant, ladite procédure de retrait de membre comprenant :

S100) une demande de retrait du membre partant (Up) est envoyée au *smart contract ;*

S110) le *smart contract* envoie un message de mise à jour de clés au moins à chaque membre actif restant du groupe, indiquant comme clé(s) à renouveler et comme clé compromise la clé secrète de chacun dudit ou desdits nœuds de la chaîne de rattachement du membre partant ;

S120) chaque membre restant actif (U1,U2,U6,U7), dit membre restant considéré (U2), évalue le nœud, dit premier nœud commun, qui est le nœud de sa chaîne de rattachement (CR2) qui est le plus éloigné du nœud racine et qui appartient aussi à la chaîne de clés à renouveler ;

S120-1) si la clé publique du premier nœud commun a été renouvelée depuis le message de mise à jour de clés, de proche en proche, le membre restant considéré calcule la clé secrète et la clé publique de nœud du nœud considéré, à partir du premier nœud commun et jusqu'au nœud racine ; inversement,

S120-2) si la clé publique du premier nœud commun n'a pas été renouvelée depuis le message de mise à jour de clés :

S120-22) pour chaque nœud, dit nœud à mettre à jour, situé sur la chaîne de rattachement allant du premier nœud commun au nœud racine, le membre restant considéré calcule la clé secrète et la clé publique de nœud du nœud à mettre à jour, et publie cette dernière dans le registre, ledit nœud à mettre à jour étant alors appelé nœud mis à jour ; tout nœud dont la clé publique est compromise étant considéré comme inexistant lors de tout calcul de clé secrète de nœud ;

S120-24) le *smart contract* envoie un message de mise à jour de nœud au moins à chaque autre membre actif du groupe, c'est-à-dire au moins à chaque membre du groupe, actif, autre que le membre partant et le membre restant considéré, indiquant le nœud mis à jour ;

S120-26) de proche en proche, chaque autre membre calcule la clé secrète de nœud du nœud considéré, pour chaque nœud mis à jour faisant également partie de sa chaîne de rattachement, dans le sens allant du nœud terminal de l'arbre auquel il est rattaché vers le nœud racine (Ns).

3. Procédé de gestion d'un groupe selon la revendication 2, comprenant en outre un procédé de reconnexion d'un membre du groupe après retrait d'un membre partant, dans lequel :

S200) lorsqu'un membre du groupe, dit membre se reconnectant (Ur), active sa connexion au groupe après une période d'inactivité, le membre se reconnectant (Ur) consulte les messages reçus du *smart contract ;*

S210) lorsque le membre se reconnectant (Ur) a reçu du *smart contract* un message de retrait de membre, le membre se reconnectant évalue le nœud, dit premier nœud commun, qui est le nœud de sa chaîne de rattachement qui est le plus éloigné du nœud racine et qui appartient aussi à la chaîne de clés à renouveler :

S210-1) si la clé publique du nœud évalué a été renouvelée depuis le message de mise à jour de clés, de proche en proche, le membre se reconnectant calcule la clé secrète et la clé publique de nœud du nœud considéré, à partir du premier nœud commun et jusqu'au nœud racine ; ou inversement,

S210-2) si la clé publique du nœud évalué n'a pas été renouvelée depuis le message de retrait de membre :

S210-22) pour chaque nœud, dit nœud à mettre à jour, situé sur la chaîne de rattachement allant du premier nœud commun au nœud racine, le membre se reconnectant calcule la clé secrète et la clé publique de nœud du nœud à mettre à jour et publie cette dernière dans le registre, ledit nœud à mettre à jour étant alors appelé nœud mis à jour ; tout nœud dont la clé publique est compromise étant considéré comme inexistant lors de tout calcul de clé secrète de nœud ;

S210-24) le *smart contract* envoie un message de mise à jour de nœud au moins à chaque autre membre du groupe actif, c'est-à-dire chaque membre du groupe, actif, autre que le membre partant et le membre se reconnectant, indiquant le nœud mis à jour ;

S210-26) de proche en proche, chaque autre membre calcule la clé secrète de nœud du nœud considéré, pour chaque nœud mis à jour faisant également partie de sa chaîne de rattachement, dans le sens allant du nœud terminal de l'arbre auquel il est directement rattaché vers le nœud racine (Ns).

4. Procédé de gestion selon l'une quelconque des revendications 1 à 3, dans lequel au moins une clé secrète de nœud ($NPK_{j,k,p+1}$) d'un nœud donné ($N_{j,k}$) est calculée :

- en calculant un élément cryptographique dit secret partagé de noeud ($NPK_{j,k,p}$) en fonction de la clé secrète ($SK_{j,k2-1,n}$) d'un premier fils et de la clé publique ($PK_{j,k2,n}$) d'un deuxième fils du nœud donné ; et
- en calculant la clé secrète ($SK_{j,k,p+1}$) du nœud donné ($N_{j,k}$) à partir dudit secret partagé de noeud ($NPK_{j,k,p}$), par exemple comme étant égale à une partie du secret de nœud.

5. Procédé de gestion d'un groupe comprenant une pluralité de membres ($U_1$... $U_n$), chaque membre ($U_i$) détenant ou étant en mesure de détenir une clé secrète ($sk_{N_{j,k}}$) de groupe,

le procédé faisant appel à un crypto-système asymétrique (Enc,Dec) vérifiant la propriété, pour deux paires de clés asymétriques (PK1,SK1) et (PK2,SK2) :

$$Enc(PK1,SK2) = Enc(SK1,PK2),$$

où Enc est la fonction de chiffrement du crypto-système, et à un registre (B) dans lequel un *smart contract* (SC) est déployé ;

une liste ($L_n$) étant utilisée pour ordonner les membres du groupe ;

le procédé comprenant une procédure d'ajout de membre pour intégrer au groupe un candidat souhaitant rejoindre le groupe,

à un instant donné où

le groupe (G) est constitué par un ensemble de membres ($U_p$), dits membres avant-ajout,

chaque membre avant-ajout ($U_{av}$) dispose de ou est en mesure de calculer une clé secrète avant-ajout (SKgroup n) du groupe avant-ajout ; et

une clé publique avant-ajout (PKgroup n) du groupe avant-ajout est enregistrée dans le registre ;

dans laquelle la procédure d'ajout de membre comprend les opérations suivantes :

S310) une demande d'admission dans le groupe du candidat ($U_{n+1}$) est transmise au *smart contract*, la demande d'admission comprenant un authentifiant ($acc_{User}$) et une clé publique personnelle (PKUn+1) du candidat, le candidat détenant en outre une clé privée personnelle (SKUn+1) à partir de laquelle sa clé publique personnelle (PKUn+1) a été calculée au moyen du crypto-système ;

S320) le *smart contract* enregistre dans le registre l'admission dans le groupe (G) d'un nouveau membre du groupe ayant l'authentifiant ($acc_{Un+1}$) du candidat et la clé publique du candidat (PKUn+1);

S330) à partir de la clé publique avant-ajout (PKgroup n) du groupe avant-ajout et de sa clé privée personnelle (SKUn+1) le candidat calcule une nouvelle clé secrète du groupe (SKgroup n+1) puis une nouvelle clé publique du groupe (PKgroup n+1) pour le groupe ;

S340) le candidat publie dans le registre la nouvelle valeur de clé publique du groupe (PKgroup n+1) calculée à l'étape S330 ;

S350) le *smart contract* envoie un message de mise à jour de clé de groupe au moins à chaque membre actif avant-ajout du groupe ; et

S360) à réception du message de mise à jour de clé de groupe, à partir de la clé secrète avant-ajout (SKgroup n) du groupe avant-ajout et de la clé publique personnelle (PKUn+1) du candidat, chaque membre avant-ajout (Up) actif calcule la nouvelle clé secrète du groupe (SKgroup n+1).

6. Procédé de gestion d'un groupe selon la revendication 5, dans lequel :

au plus tard peu après une reconnexion d'un membre du groupe ayant été inactif, ou sur demande de celui-ci lors de la reconnexion de celui-ci, lorsque la procédure d'ajout de membre a été exécutée, le *smart contract* envoie un message de mise à jour de clé de groupe après ajout d'un membre audit membre ayant été inactif ; et le procédé de gestion de groupe comprend en outre un procédé de reconnexion dudit membre ayant été inactif après ajout d'un membre, dans lequel :

S400) lorsque ledit membre ayant été inactif se reconnecte au groupe, il consulte les messages reçus du *smart contract ;*
S410) lorsque le membre se reconnectant (Ur) a reçu du *smart contract* un message de mise à jour de clé de groupe après ajout d'un membre, à partir de la clé secrète avant-ajout (SKgroup n) du groupe avant-ajout et de la clé publique personnelle (PKUn+1) du candidat, ledit membre ayant été inactif calcule la nouvelle clé secrète du groupe (SKgroup n+1).

7. Procédé de gestion d'un groupe selon la revendication 5 ou 6, le procédé comprenant en outre une procédure de retrait_d'un membre du groupe, dit membre partant (Up), autre que le membre ayant rejoint le groupe en dernier, pour retirer du groupe le membre partant, ladite procédure de retrait de membre comprenant :

S500) une demande de retrait du membre partant (Up) est envoyée au *smart contract ;*
S510) le *smart contract* identifie un membre ($U_{ini}$), dit membre d'initialisation, qui est un membre actif du groupe ayant rejoint le groupe avant le membre partant ;
S520) le *smart contract* envoie un message de nouvel ajout au groupe à chaque membre actif du groupe ayant rejoint le groupe après le membre d'initialisation, dit membre à réintégrer, à l'exception du membre partant, invitant celui-ci à se joindre à nouveau au groupe ;
S530) à réception du message de nouvel ajout au groupe, pour chaque membre à réintégrer (Up), les étapes S330 à S360 de la procédure d'ajout de membre sont effectuées, en considérant le membre à réintégrer comme étant le candidat.

8. Procédé de gestion selon l'une quelconque des revendications 5 à 7, dans lequel au moins une nouvelle clé secrète ($SK_{group\ p+1}$) de groupe est calculée :

- en calculant un élément cryptographique dit secret partagé de groupe ($NPK_{group\ p}$) en fonction de la clé secrète ($SK_{i,p}$) d'un membre du groupe et d'une clé publique ($PK_{group\ p}$) du groupe, ou encore en fonction en fonction de la clé publique ($PK_{i,p}$) d'un membre du groupe et d'une clé secrète ($SK_{group\ p}$) du groupe ; et
- en calculant la nouvelle clé secrète ($SK_{j,k,p+1}$) du groupe à partir dudit secret partagé de groupe ($NPK_{group\ p}$), par exemple comme étant égale à une partie du secret de groupe.

9. Procédé de gestion selon l'une quelconque des revendications 1 à 8, dans laquelle :

lorsqu'une nouvelle clé publique de groupe est enregistrée dans le registre, le *smart contract* assigne un statut 'Aveugle' à tous les membres restants autres que le membre, dit membre de mise à jour de groupe, ayant déclenché cet enregistrement ;
lorsqu'un membre autre que le membre déclencheur calcule la clé secrète de groupe, il en informe le *smart contract* ; sur cette base, celui-ci assigne un statut 'En-ligne' audit membre autre ; et
le procédé comporte au moins une procédure mise en œuvre à l'aide du *smart contract,* autre qu'une procédure d'ajout ou de retrait de membre, dans laquelle au moins une action du *smart contract* est réalisée en fonction du statut du membre.

10. Procédé de gestion selon l'une quelconque des revendications 1 à 9, comportant en outre une procédure d'obtention rétroactive par un membre en reconnexion suite à une période d'inactivité d'au moins une clé secrète de groupe à obtenir, qui avait été une clé courante du groupe pendant ladite période d'inactivité, ladite procédure d'obtention rétroactive comportant les étapes suivantes :

S600) à partir d'informations publiées dans le registre et/ou en interrogeant le *smart contract,* le membre en reconnexion détermine un authentifiant d'un membre détenteur de clé auprès duquel il peut obtenir ladite au moins une clé secrète à obtenir ;

S610) le membre en reconnexion demande au membre détenteur de clé de lui fournir ladite au moins une clé secrète à obtenir ;

S620) le membre détenteur de clé vérifie que le membre en reconnexion était membre du groupe à un moment où ladite au moins une clé secrète demandée était la clé secrète courante du groupe, et que le membre en reconnexion fait toujours partie du groupe.

S630) si le résultat de la vérification est positif, le membre détenteur de clé considéré ouvre un canal de communication auxiliaire sécurisé avec le membre en reconnexion, par exemple en suivant le protocole indiqué par la demande de brevet français n°1763394 ; et

S640) par le canal de communication auxiliaire sécurisé ainsi ouvert, le membre détenteur de clé considéré fournit au membre en reconnexion ladite au moins une clé secrète à obtenir demandée.

11. Procédé de gestion de groupe selon l'une quelconque des revendications 1 à 10, comprenant en outre une étape (S80 ; S370), au cours de laquelle au moins un membre actif du groupe calcule une clé symétrique de groupe à partir d'une clé secrète de groupe.

12. Procédé de gestion selon la revendication 11, dans lequel pour calculer ladite clé symétrique de groupe, ledit au moins un membre actif du groupe :

- calcule un élément cryptographique dit secret partagé de groupe ($NPK_{group\ p}$) en fonction de sa clé secrète ($SKi,p$) et d'une clé publique ($PK_{group\ p}$) du groupe, ou encore en fonction de la clé publique ($PKi,p$) d'un membre du groupe et d'une clé secrète ($SK_{group\ p}$) du groupe ; et
- calcule la clé symétrique ($EncK_{group\ p+1}$) du groupe à partir dudit secret partagé de groupe ($NPK_{group\ p}$), par exemple comme étant égale à une partie du secret de groupe.

13. Procédé de communication chiffrée au sein d'un groupe, comprenant les étapes suivantes :

A. on constitue le groupe en mettant en œuvre le procédé de gestion de groupe selon l'une quelconque des revendications 1 à 12 ;
B. au moins un membre du groupe calcule une clé symétrique de groupe ($EncK_{group\ p}$) à partir de la clé secrète de groupe ($SK_{group\ p}$) ; et
C. ce membre reçoit un message et déchiffre celui-ci à l'aide de la clé symétrique de groupe, ou chiffre un message à l'aide de la clé symétrique de groupe et envoie celui-ci.

**Patentansprüche**

1. Verfahren zur Verwaltung einer Gruppe, die eine Vielzahl von Mitgliedern ($U_1... U_n$) umfasst, wobei jedes Mitglied ($U_i$) einen geheimen Gruppenschlüssel ($SKj,k,p$) besitzt oder besitzen kann,

wobei das Verfahren ein asymmetrisches Kryptosystem (Enc, Dec) zur Überprüfung der Eigenschaft für zwei asymmetrische Schlüsselpaare (PK1,SK1) und (PK2,SK2) verwendet:

$$Enc(PK1,SK2) = Enc(SK1,PK2),$$

wobei Enc die Verschlüsselungsfunktion des Kryptosystems ist, und ein Register (B), in dem ein *Smart Contract* (SC) bereitgestellt wird;
wobei ein binärer Baum (A) verwendet wird, um die Mitglieder der Gruppe zu ordnen;
wobei jedes Mitglied (Ui) einem Endknoten des Baums zugeordnet ist, wobei dieser Knoten direkt oder über eine Folge von mindestens einem Knoten ($Nj,k$) mit einem Wurzelknoten des Baums verknüpft ist und, wobei der Wurzelknoten, und, wenn die Folge von mindestens einem Knoten existiert, die Verknüpfungskette des betreffenden Mitglieds (Ui) bildet;
wobei jedes Mitglied der Gruppe über ein asymmetrisches Schlüsselpaar verfügt, dessen geheimer Schlüssel und öffentlicher Schlüssel als geheimer Knotenschlüssel und öffentlicher Knotenschlüssel für den dem Mitglied zugeordneten Endknoten betrachtet werden;
wobei der öffentliche Schlüssel des Wurzelknotens als öffentlicher Schlüssel der Gruppe bezeichnet wird;

wobei das Verfahren ein Mitglieds-Add-In-Verfahren umfasst, um einen Kandidaten, der der Gruppe beitreten möchte, zu einem gegebenen Zeitpunkt in die Gruppe zu integrieren, zu dem
die Gruppe (G) aus einer Gesamtheit von Mitgliedern (Up) besteht, den Pre-Add-Mitgliedern, die einen Pre-Add-Baum (An) bilden,
jedes Pre-Add-Mitglied (Uav) über einen geheimen Pre-Add-Knotenschlüssel (SKj,k,n) für jeden Knoten (Nj,k,n) seiner Verknüpfungskette verfügt oder berechnen kann; und
für jeden Knoten des Pre-Add-Baums (An) ein öffentlicher Pre-Add-Knotenschlüssel (PKj,k,n) in dem Register gespeichert wird;
wobei das Mitglieds-Add-In-Verfahren die folgenden Schritte umfasst:

S10) Übermitteln eines Gruppenaufnahmeantrags des Kandidaten (U n+1) an den *Smart Contract,* wobei der Aufnahmeantrag einen Authentifikator ($acc_{User}$) und einen persönlichen öffentlichen Schlüssel (PKUn+1) des Kandidaten umfasst, wobei der Kandidat ferner einen persönlichen privaten Schlüssel (SKUn+1) besitzt, aus dem sein persönlicher öffentlicher Schlüssel (PKUn+1) mittels des Kryptosystems berechnet wurde;
S20) Speichern der Aufnahme eines neuen Mitglieds in die Gruppe (G), das den Authentifikator ($acc_{Un+1}$) des Kandidaten und den öffentlichen Schlüssel des Kandidaten (PKUn+1) aufweist, in dem Register durch den *Smart Contract;*
S30) Bestimmen durch den Kandidaten oder Erhalten von dem *Smart Contract* einer Liste des oder der Knoten seiner Verknüpfungskette im Baum;
S40) schrittweises Berechnen durch den Kandidaten für jeden Knoten seiner Verknüpfungskette ab dem Knoten des Baums, mit dem er direkt verknüpft ist, bis zu dem Wurzelknoten (N1), des geheimen Knotenschlüssels (SKj+1,k1,n+1), dann des öffentlichen Knotenschlüssels (PKj+1,k1,n+1);
S50) Veröffentlichen des oder der in Schritt S40 berechneten öffentlichen Knotenschlüssel(s) (PKj,k,n) in dem Register durch den Kandidaten;
S60) Senden, durch den *Smart Contract,* einer Mitglieds-Add-Message mindestens an jedes aktive Pre-Add-Mitglied der Gruppe; und
S70) schrittweises Berechnen des geheimen Knotenschlüssels (SKj+1,k1,n+1) durch jedes aktive Pre-Add-Mitglied (Up) bei Empfang der Mitglieds-Add-Message für jeden Knoten seiner Verknüpfungskette, der ebenfalls Teil der Verknüpfungskette des Kandidaten ist, in der Richtung von dem Knoten des Baums, mit dem er direkt verknüpft ist, zu dem Wurzelknoten (Ns);

wobei der geheime Knotenschlüssel (NPKj,k,p+1) eines gegebenen Knotens (Nj,k) von einer Person berechnet wird, deren Verknüpfungskette einen ersten Zweig des gegebenen Knotens enthält:

- wenn der gegebene Knoten einen zweiten Zweig aufweist und die Person Zugriff auf einen nicht kompromittierten öffentlichen Schlüssel des zweiten Zweigs hat, in Abhängigkeit von dem geheimen Schlüssel (SKj,k2-1,n) des ersten aktiven Zweigs und von dem öffentlichen Schlüssel (PKj,k2,n) des zweiten Zweigs des gegebenen Knotens; oder in jedem anderen Fall,
- in Abhängigkeit von dem geheimen Schlüssel (SKj-1,k1,p) des ersten Zweigs des gegebenen Knotens.

**2.** Verfahren zur Verwaltung einer Gruppe nach Anspruch 1, wobei das Verfahren ferner ein Verfahren zum Entfernen eines Mitglieds der Gruppe, des ausscheidenden Mitglieds (Up), umfasst, das ein anderes Mitglied ist als das, das zuletzt der Gruppe beigetreten ist, um das ausscheidende Mitglied aus der Gruppe zu entfernen, wobei das Verfahren zum Entfernen eines Mitglieds umfasst:

S100) Senden eines Antrags auf Entfernen des ausscheidenden Mitglieds (Up) an den *Smart Contract;*
S110) Senden einer Schlüsselaktualisierungsnachricht mindestens an jedes verbleibende aktive Mitglied der Gruppe durch den *Smart Contract,* die als zu erneuernde(r) Schlüssel und als kompromittierte(r) Schlüssel den geheimen Schlüssel jedes Knotens oder der Knoten der Verknüpfungskette des ausscheidenden Mitglieds angibt;
S120) Bewerten des Knotens, des ersten gemeinsamen Knotens, durch jedes verbleibende aktive Mitglied (U1,U2,U6,U7), das verbleibende betreffende Mitglied (U2), der der Knoten seiner Verknüpfungskette (CR2) ist, der am weitesten von dem Wurzelknoten entfernt ist und der auch zu der zu erneuernden Schlüsselkette gehört;
S120-1) wenn der öffentliche Schlüssel des ersten gemeinsamen Knotens seit der Schlüsselaktualisierungsnachricht schrittweise erneuert wurde, Berechnen des geheimen Schlüssels und des öffentlichen Knotenschlüssel des betreffenden Knotens von dem ersten gemeinsamen Knoten bis zu dem Wurzelknoten durch das betreffende verbleibende Mitglied; anderenfalls,

S120-2) wenn der öffentliche Schlüssel des ersten gemeinsamen Knotens seit der Schlüsselaktualisierungsnachricht nicht erneuert wurde:

S120-22) berechnet das betreffende verbleibende Mitglied für jeden Knoten, den zu aktualisierenden Knoten, der sich auf der Verknüpfungskette befindet, die von dem ersten gemeinsamen Knoten zu dem Wurzelknoten reicht, den geheimen Schlüssel und den öffentlichen Knotenschlüssel des zu aktualisierenden Knotens und veröffentlicht diesen in dem Register, wobei der zu aktualisierende Knoten dann als aktualisierter Knoten bezeichnet wird; wobei jeder Knoten, dessen öffentlicher Schlüssel kompromittiert ist, bei jeder Berechnung des geheimen Knotenschlüssels als nicht vorhanden betrachtet wird;

S120-24) sendet der *Smart Contract* eine Knotenaktualisierungsnachricht mindestens an jedes andere aktive Mitglied der Gruppe, das heißt mindestens an jedes aktive Mitglied der Gruppe, das nicht das ausscheidende und das betreffende verbleibende Mitglied ist, mit Angabe des aktualisierten Knotens;

S120-26) berechnet jedes andere Mitglied schrittweise den geheimen Knotenschlüssel des betreffenden Knotens für jeden aktualisierten Knoten, der ebenfalls Teil seiner Verknüpfungskette ist, in Richtung von dem Endknoten des Baums, dem er verknüpft ist, zu dem Wurzelknoten (Ns).

3.  Verfahren zur Verwaltung einer Gruppe nach Anspruch 2, das ferner ein Verfahren zu der erneuten Verbindung eines Mitglieds der Gruppe nach dem Entfernen eines ausscheidenden Mitglieds umfasst, wobei:

S200) wenn ein Gruppenmitglied, das sich erneut verbindende Mitglied (Ur), seine Verbindung zu der Gruppe nach einer Inaktivitätsperiode aktiviert, prüft das sich erneut verbindende Mitglied (Ur) die von dem *Smart Contract* erhaltenen Nachrichten;

S210) wenn das sich erneut verbindende Mitglied (Ur) von dem *Smart Contract* eine Nachricht erhalten hat, das Mitglied zu entfernen, bewertet das sich erneut verbindende Mitglied den Knoten, den ersten gemeinsamen Knoten, der der Knoten seiner Verknüpfungskette ist, der am weitesten von dem Wurzelknoten entfernt ist und der auch zu der Kette der zu erneuernden Schlüssel gehört:

S210-1) wenn der öffentliche Schlüssel des bewerteten Knotens seit der Schlüsselaktualisierungsnachricht schrittweise erneuert wurde, berechnet das sich erneut verbindende Mitglied den geheimen Schlüssel und den öffentlichen Knotenschlüssel des betreffenden Knotens von dem ersten gemeinsamen Knoten bis zu dem Wurzelknoten; oder anderenfalls,

S210-2) wenn der öffentliche Schlüssel des bewerteten Knotens seit der Nachricht, das Mitglied zu entfernen, nicht erneuert wurde:

S210-22) berechnet das sich erneut verbindende Mitglied für jeden Knoten, den zu aktualisierenden Knoten, der sich auf der Verknüpfungskette von dem ersten gemeinsamen Knoten zu dem Wurzelknoten befindet, den geheimen Schlüssel und den öffentlichen Knotenschlüssel des zu aktualisierenden Knotens und veröffentlicht diesen in dem Register, wobei der zu aktualisierende Knoten dann als aktualisierter Knoten bezeichnet wird; wobei jeder Knoten, dessen öffentlicher Schlüssel kompromittiert ist, bei jeder Berechnung des geheimen Knotenschlüssels als nicht vorhanden betrachtet wird;

S210-24) sendet der *Smart Contract* eine Knotenaktualisierungsnachricht mindestens an jedes andere aktive Mitglied der Gruppe, das heißt jedes aktive Mitglied der Gruppe, das nicht das ausscheidende Mitglied und das sich erneut verbindenden Mitglied ist, mit Angabe des aktualisierten Knotens;

S210-26) berechnet jedes andere Mitglied für jeden aktualisierten Knoten, der ebenfalls Teil seiner Verknüpfungskette ist, schrittweise den geheimen Knotenschlüssel des betreffenden Knotens in Richtung von dem Endknoten des Baums, mit dem er direkt verknüpft ist, zu dem Wurzelknoten (Ns).

4.  Verwaltungsverfahren nach einem der Ansprüche 1 bis 3, wobei mindestens ein geheimer Knotenschlüssel (NPKj,k,p+1) eines gegebenen Knotens (Nj,k) berechnet wird:

- durch Berechnen eines kryptografischen Elements, des geteilten Knotengeheimnisses (NPKj,k,p), in Abhängigkeit von dem geheimen Schlüssel (SKj,k2-1,n) eines ersten Zweigs und dem öffentlichen Schlüssel (PKj,k2,n) eines zweiten Zweigs des gegebenen Knotens; und
- durch Berechnen des geheimen Schlüssels (SKj,k,p+1) des gegebenen Knotens (Nj,k) aus dem geteilten Knotengeheimnis (NPKj,k,p), beispielsweise als gleich einem Teil des Knotengeheimnisses.

5.  Verfahren zur Verwaltung einer Gruppe, die eine Vielzahl von Mitgliedern (U$_1$... U$_n$), wobei jedes Mitglied (U$_i$) einen geheimen Gruppenschlüssel (sk$_{Nj,k}$) besitzt oder besitzen kann,

wobei das Verfahren ein asymmetrisches Kryptosystem (Enc, Dec) zur Überprüfung der Eigenschaft für zwei asymmetrische Schlüsselpaare (PK1, SK1) und (PK2, SK2) verwendet:

$$Enc(PK1, SK2) = Enc(SK1, PK2),$$

wobei Enc die Verschlüsselungsfunktion des Kryptosystems ist, und ein Register (B), in dem ein *Smart Contract* (SC) bereitgestellt wird;

wobei eine Liste (Ln) verwendet wird, um die Mitglieder der Gruppe zu ordnen;

wobei das Verfahren ein Mitglieds-Add-In-Verfahren umfasst, um einen Kandidaten, der der Gruppe beitreten möchte, in die Gruppe zu integrieren,

zu einem gegebenen Zeitpunkt, zu dem

die Gruppe (G) aus einer Gesamtheit von Mitgliedern (Up), den Pre-Add-Mitgliedern, besteht,

jedes Pre-Add-Mitglied (Uav) über einen geheimen Pre-Add-Schlüssel (SKgroup n) der Pre-Add-Gruppe verfügt oder berechnen kann; und

ein öffentlicher Pre-Add-Schlüssel (PKgroup n) der Pre-Add-Gruppe in dem Register gespeichert wird;

wobei das Mitglieds-Add-In-Verfahren die folgenden Schritte umfasst:

S310) Übermitteln eines Antrags auf Aufnahme des Kandidaten ($U_{n+1}$) in die Gruppe an den *Smart Contract,* wobei der Aufnahmeantrag einen Authentifikator ($acc_{User}$) und einen persönlichen öffentlichen Schlüssel (PKUn+1) des Kandidaten umfasst, wobei der Kandidat ferner einen persönlichen privaten Schlüssel (SKUn+1) besitzt, aus dem sein persönlicher öffentlicher Schlüssel (PKUn+1) mittels des Kryptosystems berechnet wurde;

S320) Registrieren, durch den *Smart Contract,* der Aufnahme eines neuen Mitglieds der Gruppe in die Gruppe (G), das den Authentifikator ($acc_{Un+1}$) des Kandidaten und den öffentlichen Schlüssel des Kandidaten (PKUn+1) aufweist, in dem Register;

S330) Berechnen, durch den Kandidaten, aus dem öffentlichen Pre-Add-Schlüssel (PKgroup n) der Pre-Add-Gruppe und seinem persönlichen privaten Schlüssel (SKUn+1) eines neuen geheimen Schlüssels der Gruppe (SKgroup n+1), dann eines neuen öffentlichen Schlüssels der Gruppe (PKgroup n+1) für die Gruppe;

S340) Veröffentlichen, durch den Kandidaten, des neuen, in Schritt S330 berechneten Werts des öffentlichen Schlüssels der Gruppe (PKgroup n+1) in dem Register;

S350) Senden einer Gruppenschlüsselaktualisierungsnachricht mindestens an jedes aktive Pre-Add-Mitglied der Gruppe durch den *Smart Contract;* und

S360) Berechnen, bei Empfang der Gruppenschlüsselaktualisierungsnachricht, aus dem geheimen Pre-Add-Schlüssel (SKgroup n) der Pre-Add-Gruppe und dem persönlichen öffentlichen Schlüssel (PKUn+1) des Kandidaten, des neuen geheimen Schlüssels der Gruppe (SKgroup n+1) durch jedes aktive Pre-Add-Mitglied (Up).

6. Verfahren zur Verwaltung einer Gruppe nach Anspruch 5, wobei:

der *Smart Contract* spätestens kurz nach einer erneuten Verbindung eines Mitglieds der Gruppe, das inaktiv war, oder auf dessen Aufforderung bei der erneuten Verbindung desselben, wenn das Mitglieds-Add-In-Verfahren durchgeführt wurde, eine Gruppenschlüsselaktualisierungsnachricht nach dem Hinzufügen eines Mitglieds an das Mitglied schickt, das inaktiv war; und

das Gruppenverwaltungsverfahren ferner ein Verfahren zur erneuten Verbindung des Mitglieds, das inaktiv war, nach dem Hinzufügen eines Mitglieds umfasst, wobei:

S400) wenn sich das Mitglied, das inaktiv war, erneut mit der Gruppe verbindet, prüft es die von dem *Smart Contract* erhaltenen Nachrichten;

S410) wenn das sich erneut verbindende Mitglied (Ur) von dem *Smart Contract* eine Gruppenschlüsselaktualisierungsnachricht nach dem Hinzufügen eines Mitglieds aus dem geheimen Pre-Add-Schlüssel (SKgroup n) der Pre-Add-Gruppe und dem persönlichen öffentlichen Schlüssel (PKUn+1) des Kandidaten erhalten hat, berechnet das Mitglied, das inaktiv war, den neuen geheimen Schlüssel der Gruppe (SKgroup n+1).

7. Verfahren zur Verwaltung einer Gruppe nach Anspruch 5 oder 6, wobei das Verfahren ferner ein Verfahren zum Entfernen eines Mitglieds der Gruppe, des ausscheidenden Mitglieds (Up), umfasst, das ein anderes Mitglied ist als das, das zuletzt der Gruppe beigetreten ist, um das ausscheidende Mitglied aus der Gruppe zu entfernen, wobei das Verfahren zum Entfernen eines Mitglieds umfasst:

S500) ein Antrag auf Entfernen des ausscheidenden Mitglieds (Up) wird an den *Smart Contract* gesendet;

S510) der *Smart Contract* identifiziert ein Mitglied ($U_{ini}$), das Initialisierungsmitglied, das ein aktives Mitglied der Gruppe ist, das der Gruppe vor dem ausscheidenden Mitglied beigetreten ist;

S520) der *Smart Contract* sendet eine Nachricht über die erneute Aufnahme in die Gruppe an jedes aktive Mitglied der Gruppe, das der Gruppe nach dem Initialisierungsmitglied beigetreten ist, mit Ausnahme des ausscheidenden Mitglieds, und fordert es auf, der Gruppe erneut beizutreten;

S530) nach Erhalt der Nachricht über die erneute Aufnahme in die Gruppe werden für jedes erneut zu integrierende Mitglied (Up) die Schritte S330 bis S360 des Mitglieds-Add-In-Verfahrens durchgeführt, wobei das erneut zu integrierende Mitglied als Kandidat betrachtet wird.

8. Verwaltungsverfahren nach einem der Ansprüche 5 bis 7, wobei mindestens ein neuer geheimer Gruppenschlüssel ($SK_{group\ p+1}$) berechnet wird:

- durch Berechnen eines kryptografischen Elements, des geteilten Gruppengeheimnisses ($NPK_{group\ p}$), in Abhängigkeit von dem geheimen Schlüssel (SKi,p) eines Mitglieds der Gruppe und einem öffentlichen Schlüssel ($PK_{group\ p}$) der Gruppe oder auch in Abhängigkeit in Abhängigkeit von dem öffentlichen Schlüssel (PKi,p) eines Mitglieds der Gruppe und von einem geheimen Schlüssel ($SK_{group\ p}$) der Gruppe; und

- durch Berechnen des neuen geheimen Schlüssels (SKj,k,p+1) der Gruppe aus dem geteilten Gruppengeheimnis ($NPK_{group\ p}$), das beispielsweise gleich einem Teil des Gruppengeheimnisses ist.

9. Verwaltungsverfahren nach einem der Ansprüche 1 bis 8, wobei:

wenn ein neuer öffentlicher Gruppenschlüssel in dem Register gespeichert wird, weist der *Smart Contract* allen verbleibenden Mitgliedern einen "Blind"-Status zu, außer dem Mitglied, dem Gruppenaktualisierungsmitglied, das diese Registrierung ausgelöst hat;

wenn ein anderes Mitglied als das auslösende Mitglied den geheimen Gruppenschlüssel berechnet, informiert es den *Smart Contract* darüber; auf dieser Grundlage weist er diesem anderen Mitglied einen "Online"-Status zu; und

das Verfahren mindestens ein Verfahren aufweist, das mithilfe des *Smart Contract* durchgeführt wird, das kein Verfahren zum Hinzufügen oder Entfernen von Mitgliedern ist, wobei mindestens eine Aktion des *Smart Contract* in Abhängigkeit von dem Status des Mitglieds durchgeführt wird.

10. Verwaltungsverfahren nach einem der Ansprüche 1 bis 9, das ferner ein Verfahren zum rückwirkenden Erhalt von mindestens einem zu erhaltenden geheimen Gruppenschlüssel aufweist, der während des Zeitraums der Inaktivität ein aktueller Gruppenschlüssel war, durch ein Mitglied, das sich nach einem Zeitraum der Inaktivität erneut verbindet, wobei das Verfahren zum rückwirkenden Erhalt die folgenden Schritte aufweist:

S600) das sich erneut verbindende Mitglied bestimmt auf der Grundlage der in dem Register veröffentlichten Informationen und/oder durch Abfrage des *Smart Contract* einen Authentifikator eines Schlüsselinhabermitglieds, von dem es mindestens einen zu erhaltenden geheimen Schlüssel erhalten kann;

S610) das sich erneut verbindende Mitglied fordert das Schlüsselinhabermitglied auf, ihm mindestens einen zu erhaltenden geheimen Schlüssel bereitzustellen;

S620) das Schlüsselinhabermitglied prüft, ob das sich erneut verbindende Mitglied der Gruppe zu einem Zeitpunkt war, zu dem der mindestens eine angeforderte geheime Schlüssel der aktuelle geheime Schlüssel der Gruppe war, und ob das sich erneut verbindende Mitglied immer noch Teil der Gruppe ist;

S630) wenn das Ergebnis der Überprüfung positiv ist, öffnet das betreffende Schlüsselinhabermitglied einen gesicherten Hilfskommunikationskanal mit dem sich erneut verbindenden Mitglied, beispielsweise unter Einhaltung des Protokolls aus der französischen Patentanmeldung Nr.°1763394; und

S640) das betreffende Schlüsselinhabermitglied stellt über den so geöffneten gesicherten Hilfskommunikationskanal dem sich erneut verbindenden Mitglied den mindestens einen angeforderten zu erhaltenden geheimen Schlüssel bereit.

11. Verfahren zur Gruppenverwaltung nach einem der Ansprüche 1 bis 10, das ferner einen Schritt (S80; S370) umfasst, bei dem mindestens ein aktives Mitglied der Gruppe aus einem geheimen Gruppenschlüssel einen symmetrischen Gruppenschlüssel berechnet.

**12.** Verwaltungsverfahren nach Anspruch 11, wobei zum Berechnen des symmetrischen Gruppenschlüssels das mindestens eine aktive Mitglied der Gruppe:

- ein kryptografisches Element, das geteilte Gruppengeheimnis ($NPK_{group\,p}$), in Abhängigkeit von seinem geheimen Schlüssel ($SK_{i,p}$) und einem öffentlichen Schlüssel ($PK_{group\,p}$) der Gruppe oder auch in Abhängigkeit von dem öffentlichen Schlüssel ($PK_{i,p}$) eines Mitglieds der Gruppe und von einem geheimen Schlüssel ($SK_{groupp}$) der Gruppe berechnet; und
- den symmetrischen Schlüssel ($EncK_{group\,p+1}$) der Gruppe aus dem geteilten Gruppengeheimnis ($NPK_{group\,p}$), das beispielsweise gleich einem Teil des Gruppengeheimnisses ist, berechnet.

**13.** Verfahren zur verschlüsselten Kommunikation innerhalb einer Gruppe, das die folgenden Schritte umfasst:

A. Bilden der Gruppe durch Durchführung des Gruppenverwaltungsverfahrens nach einem der Ansprüche 1 bis 12;
B. Berechnen, durch mindestens ein Mitglied der Gruppe, eines symmetrischen Gruppenschlüssels ($EncK_{groupp}$) aus dem geheimen Gruppenschlüssel ($SK_{group\,p}$); und
C. Empfangen einer Nachricht und Entschlüsseln derselben mit dem symmetrischen Gruppenschlüssel oder Verschlüsseln einer Nachricht mit dem symmetrischen Gruppenschlüssel und senden derselben durch dieses Mitglied.

## Claims

**1.** A method for managing a group comprising a plurality of members ($U_1 \ldots U_n$), each member ($U_i$) holding or being capable of holding a group secret key ($SKj,k,p$),

the method using an asymmetric cryptosystem (Enc,Dec) verifying the property, for two asymmetric key pairs (PK1,SK1) and (PK2,SK2):

$$Enc(PK1,SK2) \;=\; Enc(SK1,PK2),$$

where Enc is the encryption function of the cryptosystem, and a registry (B) wherein a smart contract (SC) is deployed;
a binary tree (A) being used to organize the group members;
each member ($U_i$) being associated with a terminal node of the tree, this node being attached to a root node of the tree, directly or via a sequence of at least one node ($Nj,k$), the root node and when it exists said sequence of at least one node forming the attachment chain of the considered member ($U_i$);
each group member having an asymmetric key pair, of which the secret key and the public key are considered as the node secret key and the node public key for the terminal node associated with the member;
the public key of the root node being referred to as group public key;
the method comprising a procedure for adding a member to include a candidate seeking to join the group in the group, at a given time when
the group (G) is formed by a set of members ($U_p$), referred to as pre-addition members, forming a pre-addition tree ($A_n$),
each pre-addition member ($U_{av}$) has or is capable of computing a pre-addition node secret key ($SKj,k,n$) for any node ($Nj,k,n$) of their attachment chain; and
for each node of the pre-addition tree (an), a pre-addition node public key ($PKj,k,n$) is registered in the registry;
the procedure for adding a member comprising the following operations:

S10) a request for entry of the candidate ($U_{n+1}$) into the group is sent to the smart contract, the request for entry comprising an authenticator ($acc_{User}$) and a personal public key ($PKUn+1$) of the candidate, the candidate further holding a personal private key ($SKUn+1$) from which their personal public key ($PKUn+1$) has been computed by means of the cryptosystem;
S20) the smart contract registers in the registry the entry into the group (G) of a new member having the candidate's authenticator ($acc_{Un+1}$) and the candidate's public key ($PKUn+1$);
S30) the candidate determines or obtains from the smart contract a list of the node(s) of their attachment chain in the tree;

S40) in a neighbor-to-neighbor manner, for each node of their attachment chain, from the node of the tree to which they are directly attached to the root node (N1), the candidate computes the node secret key (SKj+1,k1,n+1) followed by the node public key (PKj+1,k1,n+1);

S50) the candidate publishes in the registry the node public key(s) (PKj,k,n) computed in step S40;

S60) the smart contract sends a member addition message at least to each active pre-addition group member; and

S70) on receipt of the member addition message, in a neighbor-to-neighbor manner, for each node of their attachment chain that is also part of the candidate's attachment chain, in the direction from the node of the tree to which they are directly attached to the root node (Ns), each active pre-addition member (Up) computes the node secret key (SKj+1,k1,n+1);

the node secret key (NPKj,k,p+1) of a given node (Nj,k) being computed by a party whose attachment chain contains a first child of the given node:

- if said given node has a second child and said party has access to a non-compromised public key of the second child, according to the secret key (SKj,k2-1,n) of the first active child and the public key (PKj,k2,n) of said second child of said given node; or in any other case,
- according to the secret key (SKj-1,k1,p) of the first child of said given node.

2. The method for managing a group according to claim 1, the method further comprising a procedure for removing a member from the group, referred to as departing member (Up), other than the member who last joined the group, to remove the departing member from the group, said procedure for removing a member comprising:

S100) a request to remove the departing member (Up) is sent to the smart contract;

S110) the smart contract sends a key update message at least to each remaining active group member, indicating as key(s) to be refreshed and as compromised key the secret key of each of said node(s) of the attachment chain of the departing member;

S120) each remaining active member (U1,U2,U6,U7), referred to as considered remaining member (U2), evaluates the node, referred to as first common node, which is the node of their attachment chain (CR2) furthest from the root node and which also belongs to the key chain to be refreshed;

S120-1) if the public key of the first common node has been refreshed since the key update message, in a neighbor-to-neighbor manner, the considered remaining member computes the secret key and the public node key of the considered node, from the first common node to the root node; conversely,

S120-2) if the public key of the first common node has not been refreshed since the key update message:

S120-22) for each node, referred to as node to be updated, located on the attachment chain from the first common node to the root node, the considered remaining member computes the secret key and the public node key of the node to be updated, and publishes the latter in the registry, said node to be updated then being referred to as updated node; any node for which the public key is compromised being considered as non-existent during any node secret computation;

S120-24) the smart contract sends a node update message at least to each other active group member, i.e. at least to each active group member, other than the departing member and the considered remaining member, indicating the updated node;

S120-26) in a neighbor-to-neighbor manner, each other member computes the node secret of the considered node, for each updated node also belonging to their attachment chain, in the direction from the terminal node of the tree to which they are attached to the root node (Ns).

3. The method for managing a group according to claim 2, further comprising a method for reconnecting a group member after removing a departing member, wherein:

S200) when a group member, referred to as reconnecting member (Ur), activates their connection to the group after a period of inactivity, the reconnecting member (Ur) consults the messages received from the smart contract;

S210) when the reconnecting member (Ur) has received a member removal message from the smart contract, the reconnecting member evaluates the node, referred to as first common node, which is the node of their attachment chain furthest from the root node and which also belongs to the key chain to be refreshed:

S210-1) if the public key of the evaluated node has been refreshed since the key update message, in a neighbor-to-neighbor manner, the reconnecting member computes the secret key and the public node key of the considered node, from the first common node to the root node; or conversely,

S210-2) if the public key of the evaluated node has not been refreshed since the member removal message:

S210-22) for each node, referred to as node to be updated, located on the attachment chain from the first common node to the root node, the reconnecting member computes the secret key and the public node key of the node to be updated and publishes the latter in the registry, said node to be updated then being referred to as updated node; any node for which the public key is compromised being considered as non-existent during any node secret computation;

S210-24) the smart contract sends a node update message at least to each other active group member, i.e. each active group member, other than the departing member and the reconnecting member, indicating the updated node;

S210-26) in a neighbor-to-neighbor manner, each other member computes the node secret of the considered node, for each updated node also belonging to their attachment chain, in the direction from the terminal node of the tree to which they are directly attached to the root node (Ns).

4. The management method according to any one of claims 1 to 3, wherein at least one node secret key (NPKj,k,p+1) of a given node (Nj,k) is computed:

- by computing a cryptographic element referred to as node shared secret (NPKj,k,p) according to the secret key (SKj,k2-1,n) of a first child and the public key (PKj,k2,n) of a second child of the given node; and
- by computing the secret key (SKj,k,p+1) of the given node from said node shared secret (NPKj,k,p), for example as being equal to a part of the node secret.

5. A method for managing a group comprising a plurality of members ($U_1$ ...$U_n$), each member ($U_i$) holding or being capable of holding a group secret key ($sk_{Nj,k}$),

the method using an asymmetric cryptosystem (Enc,Dec) verifying the property, for two asymmetric key pairs (PK1,SK1) and (PK2,SK2):

$$Enc(PK1,SK2) = Enc(SK1,PK2),$$

where Enc is the encryption function of the cryptosystem, and a registry (B) wherein a smart contract (SC) is deployed;

a list (Ln) being used to organize the group members;

the method comprising a procedure for adding a member to include a candidate seeking to join the group in the group,

at a given time when

the group (G) is formed by a set of members (Up), referred to as pre-addition members,

each pre-addition member (Uav) has or is capable of computing a pre-addition secret key (SKgroup n) of the pre-addition group; and

a pre-addition public key (PKgroup n) of the pre-addition group is registered in the registry;

wherein the procedure for adding a member comprises the following operations:

S310) a request for entry of the candidate ($U_{n+1}$) into the group is sent to the smart contract, the request for entry comprising an authenticator ($acc_{User}$) and a personal public key (PKUn+1) of the candidate, the candidate further holding a personal private key (SKUn+1) from which their personal public key (PKUn+1) has been computed by means of the cryptosystem;

S320) the smart contract registers in the registry the entry into the group (G) of a new group member having the candidate's authenticator ($acc_{Un+1}$) and the candidate's public key (PKUn+1);

S330) based on the pre-addition public key (PKgroup n) of the pre-addition group and their personal private key (SKUn+1), the candidate computes a new group secret key (SKgroup n+1) followed by a new group public key (PKgroup n+1) for the group;

S340) the candidate publishes in the registry the new public key value of the group (PKgroup n+1) computed in step S330;

S350) the smart contract sends a group key update message at least to each active pre-addition group member; and

S360) on receipt of the group key update message, based on the pre-addition secret key (SKgroup n) of the pre-addition group and the candidate's personal public key (PKUn+1), each active pre-addition member computes the new group secret key (SKgroup n+1).

6. The method for managing a group according to claim 5, wherein:

no later than some time after a reconnection of a group member who has been inactive, or at the request of the latter during their reconnection, when the procedure for adding a member has been executed, the smart contract sends a group key update message after adding a member to said member who has been inactive; and
the method for managing a group further comprises a method for reconnecting said member who has been inactive after adding a member, wherein:

S400) when said member who has been inactive reconnects to the group, they consult the messages received from the smart contract;
S410) when the reconnecting member (Ur) has received a group key update message from the smart contract after addition of a member, based on the pre-addition secret key (SKgroup n) of the pre-addition group and the candidate's personal public key (PKUn+1), said member who has been inactive computes the new group secret key (SKgroup n+1).

7. The method for managing a group according to claim 5 or 6, the method further comprising a procedure for removing a member from the group, referred to as departing member (Up), other than the member who last joined the group, to remove the departing member from the group, said procedure for removing a member comprising:

S500) a request to remove the departing member (Up) is sent to the smart contract;
S510) the smart contract identifies a member ($U_{ini}$), referred to as initialization member, who is an active group member who joined the group before the departing member;
S520) the smart contract sends a new group addition message to each active group member who joined the group after the initialization member, referred to as member to be reintegrated, with the exception of the departing member, inviting the latter to rejoin the group;
S530) on receipt of the new group addition message, for each member to be reintegrated (Up), steps S330 to S360 of the procedure for adding a member are performed, considering the member to be reintegrated as the candidate.

8. The management method according to any one of claims 5 to 7, wherein at least one new group secret key ($SK_{group\ p+1}$) is computed:

- by computing a cryptographic element referred to as group shared secret ($NPK_{group\ p}$) according to the secret key of a group member and a group public key ($PK_{group\ p}$), or according to the public key ($PK_{i,p}$) of a group member and a group secret key ($SK_{group\ p}$); and
- by computing the new group secret key ($SK_{j,k,p+1}$) from said group shared secret ($NPK_{group\ p}$), for example as being equal to a part of the group shared secret.

9. The management method according to any one of claims 1 to 8, wherein:

when a new public group key is registered in the registry, the smart contract assigns a 'Blind' status to all remaining members other than the member, referred to as group update member, who triggered this registration;
when a member other than the triggering member computes the group secret key, they inform the smart contract;
on this basis, the smart contract assigns an 'Online' status to said other member; and
the method includes at least one procedure implemented using the smart contract, other than a procedure for adding or removing a member, wherein at least one action of the smart contract is carried out according to the member status.

10. The management method according to any one of claims 1 to 9, further including a procedure for a reconnecting member following a period of inactivity retroactively obtaining at least one group secret key to be obtained, which had been a current group key during said period of inactivity, said retroactive obtaining procedure including the following steps:

S600) based on information published in the registry and/or by querying the smart contract, the reconnecting member determines an authenticator of a key holder member from whom they can obtain said at least one secret key to be obtained;

S610) the reconnecting member requests the key holder member to provide said member with at least one secret key to be obtained;

S620) the key holder member verifies that the reconnecting member was a group member at a time when said at least one requested secret key was the current group secret key, and that the reconnecting member still belongs to the group.

S630) if the result of the verification is positive, the considered key holder member opens a secure auxiliary communication channel with the reconnecting member, for example by following the protocol indicated by French patent application no. 1763394; and

S640) via the secured auxiliary communication channel thus opened, the considered key holder member provides said reconnecting member with at least one requested secret key to be obtained.

11. The method for managing a group according to any one of claims 1 to 10, further comprising a step (S80; S370), wherein at least one active group member computes a group symmetric key from a group secret key.

12. The management method according to claim 11, wherein to compute said group symmetric key, said at least one active group member:

- computes a cryptographic element referred to as group shared secret ($NPK_{group\ p}$) according to their secret key ($SK_{i,p}$) and a group public key ($PK_{group\ p}$), or according to the public key ($PK_{i,p}$) of a group member and a group secret key ($SK_{group\ p}$); and
- computes the group symmetric key ($EncK_{group\ p+1}$) from said group shared secret ($NPK_{group\ p}$), for example as being equal to a part of the group secret.

13. A method for encrypted communication within a group, comprising the following steps:

A. the group is formed by implementing the method for managing a group according to any one of claims 1 to 12;
B. at least one group member computes a group symmetric key ($EncK_{group\ p}$) from the group secret key ($SK_{group\ p}$); and
C. this member receives a message and deciphers it using the group symmetric key, or encrypts a message using the group symmetric key and sends it.

[Fig. 1]

[Fig. 2]

EP 4 664 819 B1

[Fig. 3]

36

[Fig. 4]

[Fig. 5]

L

T1    T2         T4        T5

U1 Alice

U2 Bob    U3 Charles    U4 Dave    U5 Esther

G

[Fig. 6]

L

T1    T2

U1 Alice

U2 Bob    U3 Charles    U4 Dave    U5 Esther

[Fig. 7]

S10) une demande d'admission dans le groupe du candidat ($U_{n+1}$) est transmise au *smart contract*

$\downarrow$

S20) le *smart contract* enregistre l'admission dans le groupe (G) d'un nouveau membre dans le registre

$\downarrow$

S30) le candidat détermine ou obtient du *smart contract* la liste des nœuds de sa chaîne de rattachement

$\downarrow$

S40) de proche en proche pour chaque nœud de sa chaîne de rattachement faisant aussi partie de la chaîne de rattachement du candidat, le candidat calcule le secret partagé de nœud, et en déduit la clé secrète puis la clé publique de nœud

$\downarrow$

S50) le candidat publie dans le registre la ou les clé(s) publique(s) de nœud

$\downarrow$

S60) le *smart contract* envoie un message d'ajout de membre au moins à chaque membre actif avant-ajout du groupe

$\downarrow$

S70) de proche en proche pour chaque nœud commun à sa chaîne de rattachement et à la chaîne de rattachement du candidat, le candidat calcule le secret partagé de nœud, et en déduit la clé secrète puis la clé publique de nœud

$\downarrow$

S80) un membre actif du groupe calcule une clé symétrique de groupe à partir d'une clé secrète du groupe

[Fig. 8]

S100) une demande de retrait du membre partant (U3) est envoyée au *smart contract*

S110) le *smart contract* envoie un message de mise à jour de clés aux membres actifs restants, indiquant comme clé(s) à renouveler et comme clé compromise la clé secrète de chacun des nœuds de la chaîne de rattachement du membre partant

S120) chaque membre restant actif (U2) évalue le premier nœud commun

La clé publique du premier nœud commun a-t-elle été renouvelée depuis le message de mise à jour de clés ?

NON

OUI

S120-1) le membre restant considéré calcule la clé secrète et la clé publique de nœud du nœud considéré

S120-2) Pour chacun des nœuds à mettre à jour :

S120-22) le membre restant considéré calcule la clé secrète et la clé publique de nœud du nœud à mettre à jour, et publie cette dernière dans le registre

S120-24) le *smart contract* envoie un message de mise à jour de nœud aux autres membres actifs du groupe, indiquant le ou les nœud(s) mis à jour

S120-26) chaque autre membre calcule la clé secrète de nœud du nœud considéré, pour chaque nœud mis à jour faisant également partie de sa chaîne de rattachement

[Fig. 9]

S200) lorsqu'un membre du groupe se reconnectant active sa connexion au groupe après une période d'inactivité, il consulte les messages reçus du *smart contract*

S210) lorsque le membre se reconnectant (Ur) a reçu du *smart contract* un message de retrait de membre, le membre se reconnectant évalue le(s) nœud(s) de sa chaîne de rattachement qui appartiennent aussi à la chaîne de rattachement du membre partant :

La clé publique du nœud évalué a-t-elle été publiée depuis le message de retrait de membre ?

NON                                            OUI

S210-1) le membre se reconnectant calcule la clé secrète de nœud du nœud évalué

S210-2) Pour chacun des nœuds à mettre à jour :

S210-22), le membre se reconnectant calcule la clé secrète et la clé publique de noeud du nœud à mettre à jour et publie cette dernière dans le registre

S210-24) le *smart contract* envoie un message de mise à jour de nœud aux autres membres actifs du groupe, indiquant le ou les nœud(s) mis à jour

S210-26) chaque autre membre calcule la clé secrète de nœud du nœud considéré, pour chaque nœud mis à jour faisant également partie de sa chaîne de rattachement

[Fig. 10]

S310) une demande d'admission dans le groupe du candidat (Esther, $U_{n+1}$) est transmise au *smart contract*

↓

S320) le *smart contract* enregistre dans le registre l'admission dans le groupe (G) d'un nouveau membre du groupe ayant l'authentifiant ($acc_{U_{n+1}}$) du candidat et la clé publique du candidat (PKUn+1)

↓

S330) à partir de la clé publique avant-ajout (PKgroup n) du groupe avant-ajout et de sa clé privée personnelle (SKUn+1) le candidat calcule une nouvelle clé secrète du groupe (SKgroup n+1) puis une nouvelle clé publique du groupe (PKgroup n+1) pour le groupe

↓

S340) le candidat publie dans le registre la nouvelle valeur de clé publique du groupe (PKgroup n+1) calculée à l'étape S330

↓

S350) le *smart contract* envoie un message de mise à jour de clé de groupe au moins à chaque membre actif avant-ajout du groupe

↓

S360) à réception du message, chaque membre avant-ajout (Up) actif calcule la nouvelle clé secrète du groupe (SKgroup n+1).

⋮

Reconnexion d'un membre ayant été inactif : le *smart contract* envoie à ce membre un message de mise à jour de clé de groupe après ajout d'un membre

↓

S400) lorsque ledit membre ayant été inactif se reconnecte au groupe, il consulte les messages reçus du *smart contract*

↓

S410) lorsque le membre se reconnectant (Charles) a reçu du *smart contract* un message de mise à jour de clé de groupe après ajout de membre, le membre ayant été inactif calcule la nouvelle clé secrète du groupe (SKgroup n+1).

[Fig. 11]

S500) une demande de retrait du membre partant (Up) est envoyée au *smart contract*

S510) le *smart contract* identifie un membre (Bob, U$_{ini}$), dit membre d'initialisation, qui est un membre actif du groupe ayant rejoint le groupe avant le membre partant

S520) le *smart contract* envoie un message de nouvel ajout au groupe à chaque membre à réintégrer, invitant celui-ci à se joindre à nouveau au groupe

S530) à réception du message de nouvel ajout au groupe, pour chaque membre à réintégrer (Up), les étapes S330 à S360 de la procédure d'ajout de membre sont effectuées, en considérant le membre à réintégrer comme étant le candidat.

[Fig. 12]

S600) à partir d'informations publiées dans le registre et/ou en interrogeant le *smart contract*, le membre en reconnexion détermine un authentifiant d'un membre détenteur de clé auprès duquel il peut obtenir ladite au moins une clé secrète à obtenir ;

S610) le membre en reconnexion demande au membre détenteur de clé de lui fournir ladite au moins une clé secrète à obtenir ;

S620) le membre détenteur de clé vérifie que le membre en reconnexion était membre du groupe à un moment où ladite au moins une clé serète demandée était la clé secrète courante du groupe, et que le membre en reconnexion fait toujours partie du groupe.

S630) si le résultat de la vérification est positif, le membre détenteur de clé considéré ouvre un canal de communication auxiliaire sécurisé avec le membre en reconnexion, par exemple en suivant le protocole indiqué par la demande de brevet français n°1763394

S640) par le canal de communication auxiliaire sécurisé ainsi ouvert, le membre détenteur de clé considéré fournit au membre en reconnexion ladite au moins une clé secrète à obtenir demandée.

[Fig. 13]

A. on constitue le groupe en mettant en œuvre le procédé de gestion de groupe

B. au moins un membre du groupe calcule une clé symétrique de groupe ($EncK_{group\ p}$) à partir de la clé secrète de groupe ($SK_{group\ p}$)

C. ce membre reçoit un message et déchiffre celui-ci à l'aide de la clé symétrique de groupe, ou chiffre un message à l'aide de la clé symétrique de groupe et envoie celui-ci.

**RÉFÉRENCES CITÉES DANS LA DESCRIPTION**

**Documents brevets cités dans la description**

- FR 1763393
- FR 1763394
- CN 117857033 A1
- US 2019268284 A